(19) **Europäisches Patentamt / European Patent Office / Office européen des brevets**

(11) **EP 4 312 335 B1**

(12) **EUROPEAN PATENT SPECIFICATION**

(45) Date of publication and mention
of the grant of the patent:
**20.08.2025 Bulletin 2025/34**

(21) Application number: **23188243.2**

(22) Date of filing: **27.07.2023**

(51) International Patent Classification (IPC):
*H02J 3/00* (2006.01)  *H02J 3/38* (2006.01)

(52) Cooperative Patent Classification (CPC):
**H02J 3/381; H02J 3/001; H02J 3/38;** H02J 2300/24;
H02J 2300/28

(54) **CONVERTER, GRID POWER SUPPLY SYSTEM, AND CONVERTER CONTROL METHOD**

WANDLER, NETZSTROMVERSORGUNGSSYSTEM UND WANDLERSTEUERUNGSVERFAHREN

CONVERTISSEUR, SYSTÈME D'ALIMENTATION ÉLECTRIQUE DE RÉSEAU ET PROCÉDÉ DE
COMMANDE DE CONVERTISSEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.07.2022 CN 202210911035**

(43) Date of publication of application:
**31.01.2024 Bulletin 2024/05**

(73) Proprietor: **Huawei Digital Power Technologies
Co., Ltd.
Shenzhen, Guangdong 518043 (CN)**

(72) Inventors:
• **WANG, Congyuan**
**518043 Shenzhen (CN)**

• **SHAO, Zhangping**
**518043 Shenzhen (CN)**
• **XIN, Kai**
**518043 Shenzhen (CN)**
• **LIU, Yunfeng**
**518043 Shenzhen (CN)**

(74) Representative: **Gill Jennings & Every LLP
The Broadgate Tower
20 Primrose Street
London EC2A 2ES (GB)**

(56) References cited:
**CN-B- 112 994 104    US-A1- 2022 099 754**

**Description**

**TECHNICAL FIELD**

This application relates to the field of electronic power technologies, and in particular, to a converter, a grid power supply system, and a converter control method.

**BACKGROUND**

As a penetration rate of distributed energy such as photovoltaic, wind power, and energy storage apparatuses gradually increases, an electronic power grid-connected inverter (or converter) serving as an important component for energy exchange has increasingly obvious mutual impact with a grid. In a process of supplying power to an alternating current grid, a low-voltage fault or a high-voltage fault occurs in the alternating current grid due to a factor such as a short circuit of a transmission line between devices or a device fault. Currently, grid-connected standards in a plurality of countries require that a converter has a fault ride through capability. To be specific, when a low-voltage fault or a high-voltage fault occurs in the grid, a related device at a power supply end runs continuously without disconnecting from the grid and injects a reactive current to help the grid restore a normal voltage.

In a research and experiment process, the inventor of this application finds that when a grid-connected environment of the converter is a weak grid, the low-voltage fault or the high-voltage fault occurs in the alternating current grid, a reactive current output by the converter obviously changes an imbalance degree of a voltage of a converter port, and a changed voltage at the port interferes with fault detection and reactive current control of the converter on the grid and even affects a running status of the converter. As a result, a converter fault ride through state is repeatedly entered and exited in the weak-grid environment, the reactive current output by the converter repeatedly oscillates, and finally, a converter fault ride through failure is caused. Therefore, how to resolve a problem of repeated oscillation of the reactive current output by the converter in the weak-grid environment and avoid the converter fault ride through failure is one of urgent technical problems that need to be resolved currently. US 2022/0099754 A1 discloses a fault control apparatus and method for controlling distributed energy resources in a distribution power system. CN 112994104 B discloses a microgrid fault voltage optimization supporting method comprising a three-phase four-wire system inverter.

**SUMMARY**

This invention is directed to a converter according to claim 1 and a converter control method according to claim 10, to inject a stable negative-sequence reactive current into an alternating current grid during an asymmetric fault, so that stability and security of grid power supplying in a weak-grid case are enhanced, and reliability of grid fault restoration is high. Preferred embodiments are defined in the dependent claims.

According to a first aspect, this application provides a converter. The converter is applicable to a grid power supply system, an input end of the converter is coupled to a power supply in the grid power supply system, and an output end of the converter is coupled to an alternating current grid. Herein, the converter includes a converting module and a fault ride through control module. The fault ride through control module is configured to: when an asymmetric fault parameter of the alternating current grid is greater than a fault determining threshold, control, based on fault ride through duration of historical asymmetric fault ride through that is closest to current time and that occurs in the alternating current grid, the converting module to inject a negative-sequence reactive current into the alternating current grid. The asymmetric fault parameter includes one of a first negative-sequence voltage, a difference between a maximum valid value and a corresponding minimum valid value of a three-phase line voltage, a difference between a maximum peak-to-peak value and a corresponding minimum peak-to-peak value of the three-phase line voltage, a difference between a maximum amplitude value and a corresponding minimum amplitude value of the three-phase line voltage, a difference between a maximum valid value and a corresponding minimum valid value of a three-phase phase voltage, a difference between a maximum peak-to-peak value and a corresponding minimum peak-to-peak value of the three-phase phase voltage, or a difference between a maximum amplitude value and a corresponding minimum amplitude value of the three-phase phase voltage.

In this application, when detecting that an asymmetric fault occurs in the alternating current grid, the fault ride through control module in the converter obtains duration of previous fault ride through, that is, the fault ride through duration of the historical asymmetric fault ride through that is closest to the current time. The fault ride through control module may control, based on the fault ride through duration, the converting module to inject the negative-sequence reactive current into the alternating current grid, and adjust, based on different fault ride through duration, a current value of the negative-sequence reactive current injected into the alternating current grid, to avoid a problem that asymmetric fault detection is interfered with because a negative-sequence reactive current with an excessively large current value changes an imbalance degree of a voltage of a converter port (for example, reducing a negative-sequence voltage of the converter port) in a weak-grid environment. The converter can inject the stable negative-sequence reactive current into the alternating current grid during the asymmetric fault, so that stability and security of grid power supplying in a weak-grid case are enhanced, and reliability of grid fault restoration is high.

With reference to the first aspect, in a first possible implementation, the fault ride through control module is further configured to: when the fault ride through duration is null or the fault ride through duration is greater than or equal to a preset time threshold, obtain a second negative-sequence reactive current value based on a second negative-sequence voltage and a first negative-sequence reactive current that are used before a current asymmetric fault occurs in the alternating current grid, a rated voltage of the converter, a rated current of the converter, and the first negative-sequence voltage, and control the converting module to inject a second negative-sequence reactive current whose current value is equal to the second negative-sequence reactive current value into the alternating current grid. The fault ride through control module obtains the fault ride through duration of the latest asymmetric fault ride through, and injects a negative-sequence reactive current with a corresponding current value into the alternating current grid based on the fault ride through duration, to ensure that the converter can inject the stable negative-sequence reactive current into the alternating current grid during the asymmetric fault, so that stability and security of grid power supplying in the weak-grid case are enhanced.

With reference to the first aspect, in a second possible implementation, the fault ride through control module is further configured to: when the fault ride through duration is null or the fault ride through duration is greater than or equal to a preset time threshold, obtain a second negative-sequence reactive current value based on a first negative-sequence reactive current used before a current asymmetric fault occurs in the alternating current grid, the fault determining threshold, a rated voltage of the converter, a rated current of the converter, and the first negative-sequence voltage, and control the converting module to inject a second negative-sequence reactive current whose current value is equal to the second negative-sequence reactive current value into the alternating current grid. The fault ride through control module obtains the fault ride through duration of the latest asymmetric fault ride through, and injects a negative-sequence reactive current with a corresponding current value into the alternating current grid based on the fault ride through duration, to ensure that the converter can inject the stable negative-sequence reactive current into the alternating current grid during the asymmetric fault, so that stability and security of grid power supplying in the weak-grid case are enhanced.

With reference to the first aspect, in a third possible implementation, the fault ride through control module is further configured to: when the fault ride through duration is less than a preset time threshold, obtain a second negative-sequence reactive current value based on a second negative-sequence voltage and a first negative-sequence reactive current that are used before a current asymmetric fault occurs in the alternating current grid, a rated voltage of the converter, a rated current of the converter, and the first negative-sequence voltage, obtain a third negative-sequence reactive current value based on the second negative-sequence reactive current value, and control the converting module to inject a third negative-sequence reactive current whose current value is equal to the third negative-sequence reactive current value into the alternating current grid, where a current absolute value of the third negative-sequence reactive current is less than a current absolute value of the second negative-sequence reactive current. When the fault ride through duration is less than the preset time threshold, the fault ride through control module reduces the value of the negative-sequence reactive current injected into the alternating current grid, to avoid interference with asymmetric fault detection caused because the negative-sequence reactive current output by the converter in the weak-grid environment reduces the negative-sequence voltage of the converter port, and ensure that the converter can inject the stable negative-sequence reactive current into the alternating current grid during the asymmetric fault.

With reference to the first aspect, in a fourth possible implementation, the fault ride through control module is further configured to: when the fault ride through duration is less than a preset time threshold, obtain a second negative-sequence reactive current value based on a first negative-sequence reactive current used before a current asymmetric fault occurs in the alternating current grid, the fault determining threshold, a rated voltage of the converter, a rated current of the converter, and the first negative-sequence voltage, obtain a third negative-sequence reactive current value based on the second negative-sequence reactive current value, and control the converting module to inject a third negative-sequence reactive current whose current value is equal to the third negative-sequence reactive current value into the alternating current grid, where a current absolute value of the third negative-sequence reactive current is less than a current absolute value of the second negative-sequence reactive current. When the fault ride through duration is less than the preset time threshold, the fault ride through control module reduces the value of the negative-sequence reactive current injected into the alternating current grid, to avoid interference with asymmetric fault detection caused because the negative-sequence reactive current output by the converter in the weak-grid environment reduces the negative-sequence voltage of the converter port, and ensure that the converter can inject the stable negative-sequence reactive current into the alternating current grid during the asymmetric fault.

With reference to the first possible implementation of the first aspect or the third possible implementation of the first aspect, in a fifth possible implementation, the second negative-sequence reactive current satisfies:

$$Iqn2 = Iqn1 + K * In * \frac{(U2 - U1)}{Un}$$

U2 is the second negative-sequence voltage, Iqn1 is the first negative-sequence reactive current, Un is the rated voltage of the converter, In is the rated current of the converter, U1 is the first negative-sequence voltage, K is a positive number, and Iqn2 is the second negative-sequence reactive current. The fault ride through control module may obtain, according to the foregoing expression, the second negative-sequence reactive current value corresponding to the second negative-sequence reactive current injected into the alternating current grid, and control the converting module to inject the second negative-sequence reactive current whose current value is equal to the second negative-sequence reactive current value into the alternating current grid.

With reference to the second possible implementation of the first aspect or the fourth possible implementation of the first aspect, in a sixth possible implementation, the second negative-sequence reactive current satisfies:

$$Iqn2 = Iqn1 + K * In * \frac{(Unv - U1)}{Un}$$

Iqn1 is the first negative-sequence reactive current, Unv is the fault determining threshold, Un is the rated voltage of the converter, In is the rated current of the converter, U1 is the first negative-sequence voltage, K is a positive number, and Iqn2 is the second negative-sequence reactive current. The fault ride through control module may obtain, according to the foregoing expression, the second negative-sequence reactive current value corresponding to the second negative-sequence reactive current injected into the alternating current grid, and control the converting module to inject the second negative-sequence reactive current whose current value is equal to the second negative-sequence reactive current value into the alternating current grid.

According to a second aspect, this application provides a grid power supply system. The grid power supply system includes a power supply, a transformer, and the converter provided in any one of the first aspect and the possible implementations of the first aspect. The power supply is configured to provide energy input or power input for the converter. The converter is configured to: perform conversion based on the energy input or the power input provided by the power supply, to obtain a first alternating current, and output the first alternating current to the transformer. The transformer is configured to: perform power conversion based on the first alternating current, and output a second alternating current to an alternating current grid. The converter is further configured to: when an asymmetric fault occurs in the alternating current grid, obtain fault ride through duration of historical asymmetric fault ride through that is closest to current time and that occurs in the alternating current grid, and inject a negative-sequence reactive current into the alternating current grid based on the fault ride through duration.

With reference to the second aspect, in a first possible implementation, the power supply includes at least one of a solar cell panel, a wind turbine generator, or an energy storage battery.

In this application, the converter provided according to the first aspect can inject the stable negative-sequence reactive current into the alternating current grid in the grid power supply system during the asymmetric fault, so that stability and security of grid power supplying in a weak-grid case are enhanced, and reliability of grid fault restoration is high.

According to a third aspect, this application provides a converter control method in a grid power supply system. The method is applicable to a converter in the grid power supply system, the grid power supply system includes a power supply, a transformer, and the converter, an input end of the converter is coupled to the power supply, an output end of the converter is coupled to an alternating current grid through the transformer, and the converter includes a converting module and a fault ride through control module. In the method, when an asymmetric fault parameter of the alternating current grid is greater than a fault determining threshold, the fault ride through control module controls, based on fault ride through duration of historical asymmetric fault ride through that is closest to current time and that occurs in the alternating current grid, the converting module to inject a negative-sequence reactive current into the alternating current grid, where the asymmetric fault parameter includes one of a first negative-sequence voltage, a difference between a maximum valid value and a corresponding minimum valid value of a three-phase line voltage, a difference between a maximum peak-to-peak value and a corresponding minimum peak-to-peak value of the three-phase line voltage, a difference between a maximum amplitude value and a corresponding minimum amplitude value of the three-phase line voltage, a difference between a maximum valid value and a corresponding minimum valid value of a three-phase phase voltage, a difference between a maximum peak-to-peak value and a corresponding minimum peak-to-peak value of the three-phase phase voltage, or a difference between a maximum amplitude value and a corresponding minimum amplitude value of the three-phase phase voltage.

In this application, when detecting that an asymmetric fault occurs in the alternating current grid, the fault ride through control module in the converter obtains duration of previous fault ride through, that is, the fault ride through duration of the historical asymmetric fault ride through that is closest to the current time. The fault ride through control module may control, based on the fault ride through duration, the converting module to inject the negative-sequence reactive current into the alternating current grid, and adjust, based on different fault ride through duration, a current value of the negative-sequence reactive current injected into the alternating current grid, to avoid a problem that asymmetric fault detection is interfered with because a negative-sequence reactive current with an excessively large current value changes an imbalance degree of a voltage of a converter port (for example, reducing a negative-sequence voltage of the converter port) in a weak-grid environment. The converter can inject the stable negative-sequence reactive current into the alternating current grid during the asymmetric fault, so that stability and security of grid power supplying in a weak-grid case are enhanced, and reliability of grid fault restoration is high.

With reference to the third aspect, in a first possible implementation, when the fault ride through duration is null or the fault ride through duration is greater than or equal to a preset time threshold, the fault ride through control module obtains a second negative-sequence reactive current value based on a second negative-sequence voltage and a first negative-sequence reactive current that are used before a current asymmetric fault occurs in the alternating current grid, a rated voltage of the converter, a rated current of the converter, and the first negative-sequence voltage, and controls the converting module to inject a second negative-sequence reactive current whose current value is equal to the second negative-sequence reactive current value into the alternating current grid. The fault ride through control module obtains the fault ride through duration of the latest asymmetric fault ride through, and injects a negative-sequence reactive current with a corresponding current value into the alternating current grid based on the fault ride through duration, to ensure that the converter can inject the stable negative-sequence reactive current into the alternating current grid during the asymmetric fault, so that stability and security of grid power supplying in the weak-grid case are enhanced.

With reference to the third aspect, in a second possible implementation, when the fault ride through duration is null or the fault ride through duration is greater than or equal to a preset time threshold, the fault ride through control module obtains a second negative-sequence reactive current value based on a first negative-sequence reactive current used before a current asymmetric fault occurs in the alternating current grid, the fault determining threshold, a rated voltage of the converter, a rated current of the converter, and the first negative-sequence voltage, and controls the converting module to inject a second negative-sequence reactive current whose current value is equal to the second negative-sequence reactive current value into the alternating current grid. The fault ride through control module obtains the fault ride through duration of the latest asymmetric fault ride through, and injects a negative-sequence reactive current with a corresponding current value into the alternating current grid based on the fault ride through duration, to ensure that the converter can inject the stable negative-sequence reactive current into the alternating current grid during the asymmetric fault, so that stability and security of grid power supplying in the weak-grid case are enhanced.

With reference to the third aspect, in a third possible implementation, when the fault ride through duration is less than a preset time threshold, the fault ride through control module obtains a second negative-sequence reactive current value based on a second negative-sequence voltage and a first negative-sequence reactive current that are used before a current asymmetric fault occurs in the alternating current grid, a rated voltage of the converter, a rated current of the converter, and the first negative-sequence voltage, obtains a third negative-sequence reactive current value based on the second negative-sequence reactive current value, and controls the converting module to inject a third negative-sequence reactive current whose current value is equal to the third negative-sequence reactive current value into the alternating current grid, where a current absolute value of the third negative-sequence reactive current is less than a current absolute value of the second negative-sequence reactive current. When the fault ride through duration is less than the preset time threshold, the fault ride through control module reduces the value of the negative-sequence reactive current injected into the alternating current grid, to avoid interference with asymmetric fault detection caused because the negative-sequence reactive current output by the converter in the weak-grid environment reduces the negative-sequence voltage of the converter port, and ensure that the converter can inject the stable negative-sequence reactive current into the alternating current grid during the asymmetric fault.

With reference to the third aspect, in a fourth possible implementation, when the fault ride through duration is less than a preset time threshold, the fault ride through control module obtains a second negative-sequence reactive current value based on a first negative-sequence reactive current used before a current asymmetric fault occurs in the alternating current grid, the fault determining threshold, a rated voltage of the converter, a rated current of the converter, and the first negative-sequence voltage, obtains a third negative-sequence reactive current value based on the second negative-sequence reactive current value, and controls the converting module to inject a third negative-sequence reactive current whose current value is equal to the third negative-sequence reactive current value into the alternating current grid, where a current absolute value of the third negative-sequence reactive current is less than a current absolute value of the second negative-sequence reactive current. When the fault ride through duration is less than the preset time threshold, the fault ride through control module reduces the value of the negative-sequence reactive current injected into the alternating current grid, to avoid interference with asymmetric fault detection caused because the negative-sequence reactive current output by the converter in the weak-grid environment reduces the negative-sequence voltage of the converter port, and ensure that the converter can inject the stable negative-sequence reactive current into the alternating current grid during the asymmetric fault.

## BRIEF DESCRIPTION OF DRAWINGS

To describe the technical solutions in embodiments of this application more clearly, the following briefly describes the accompanying drawings for embodiments. It is clear that the accompanying drawings in the following descriptions show merely some embodiments of this application, and a person of ordinary skill in the art may derive other drawings from these accompanying drawings without creative efforts.

FIG. 1 is a schematic diagram of an application scenario of a grid power supply system according to this application;
FIG. 2a is a schematic diagram of repeatedly entering and exiting an asymmetric fault ride through state according to this application;
FIG. 2b is a schematic diagram of a negative-sequence reactive current instruction and a feedback for a fault ride through failure according to this application;
FIG. 3 is a schematic diagram of a voltage and a current of a converter port with a fault ride through failure according to this application;
FIG. 4 is a schematic structural diagram of a grid power supply system according to this application;
FIG. 5a is a schematic diagram of stability of an asymmetric fault ride through state according to this application;
FIG. 5b is a schematic diagram of a negative-sequence reactive current instruction and a feedback for an asymmetric fault ride through success according to this application;
FIG. 6 is a schematic diagram of a voltage and a current of a converter port with a fault ride through success according to this application; and
FIG. 7 is a schematic flowchart of a converter control method in a grid power supply system according to this application.

## DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

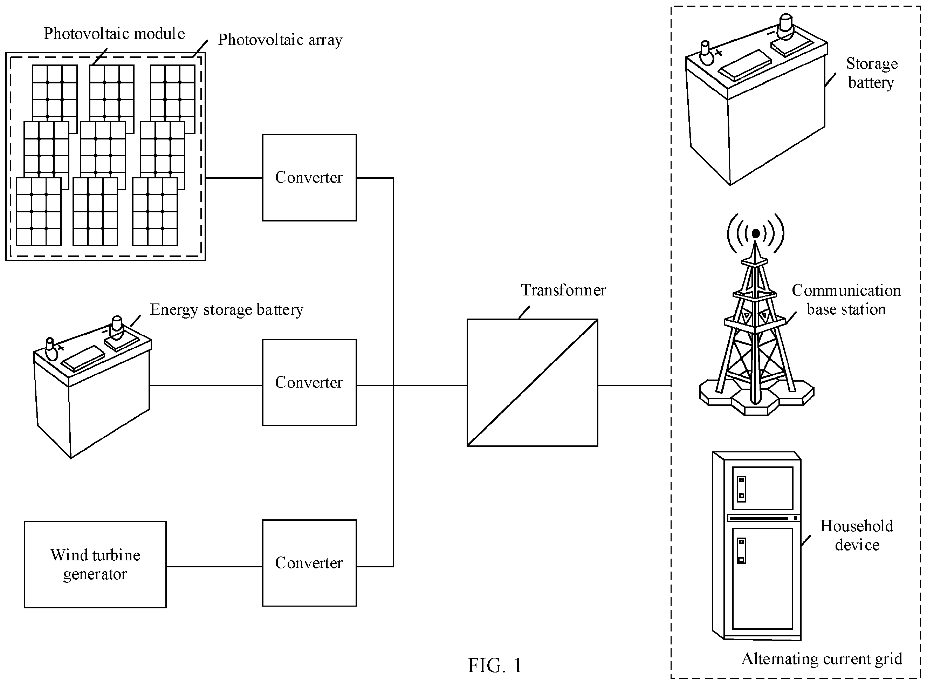

FIG. 1 is a schematic diagram of an application scenario of a grid power supply system according to this application. The grid power supply system provided in this application may include a power supply, a transformer, and a converter. The power supply may include a photovoltaic array. An output end of the photovoltaic array may be connected to a first end of the converter, and a second end of the converter may be connected to an alternating current grid through the transformer. In the grid power supply system shown in FIG. 1, the photovoltaic array may include one or more photovoltaic strings connected in parallel, and one photovoltaic string may be obtained by connecting one or more photovoltaic modules in series. The converter may perform inversion conversion on a direct current output by the photovoltaic array, and output, to the transformer, an alternating current obtained through the inversion conversion. The transformer performs voltage conversion on the alternating current, and then supplies power to an electric device such as a storage battery, a communication base station, or a household device in the alternating current grid.

In some feasible implementations, with reference to FIG. 1 again, the power supply may further include an energy storage battery, an output end of the energy storage battery may be connected to the first end of the converter, and the second end of the converter may be connected to the alternating current grid through the transformer. The converter may perform inversion conversion on a direct current provided by the energy storage battery, and output, to the transformer, an alternating current obtained through the inversion conversion. The transformer performs voltage conversion on the alternating current, and then supplies power to the electric device such as the storage battery, the communication base station, or the household device in the alternating current grid.

In some feasible implementations, with reference to FIG. 1 again, the power supply may further include a wind turbine generator, an output end of the wind turbine generator may be connected to the first end of the converter, and the second end of the converter may be connected to the alternating current grid through the transformer. The converter may perform voltage conversion on an alternating current provided by the wind turbine generator (where the alternating current provided by the wind turbine generator may be rectified to obtain a direct current, and then inversion conversion is performed on the direct current obtained through rectification, to obtain an alternating current through voltage conversion), and output, to the transformer, the alternating current obtained through the voltage conversion. The transformer performs voltage conversion on the alternating current again, and then supplies power to the electric device such as the storage battery, the communication base station, or the household device in the alternating current grid.

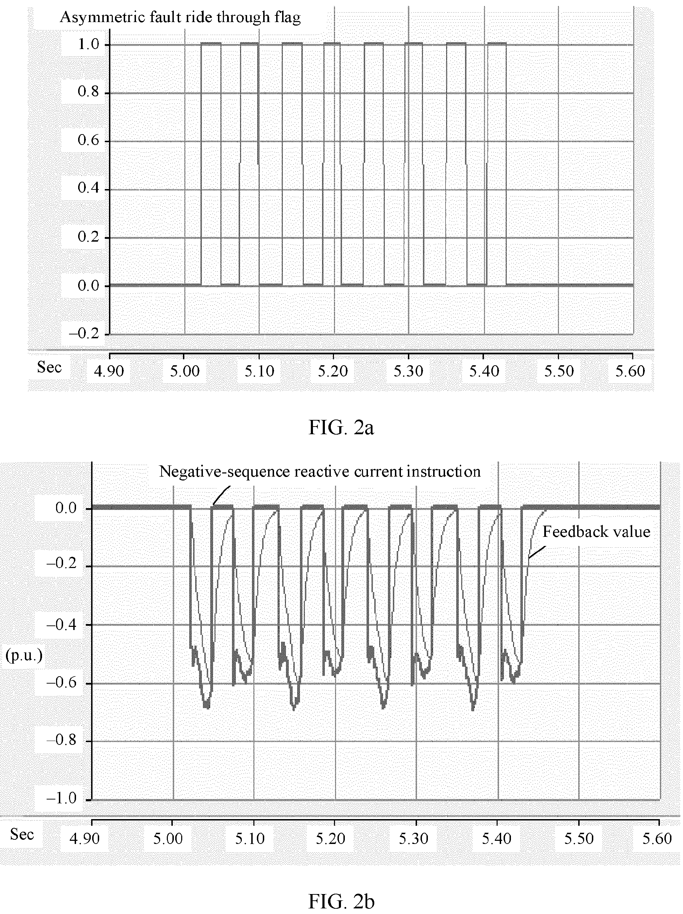

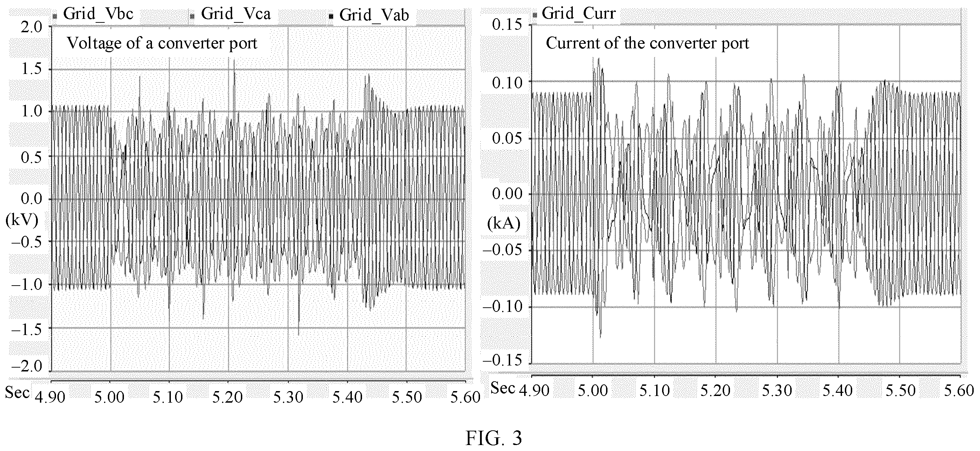

In the application scenario shown in FIG. 1, in a process in which the grid power supply system supplies power to the alternating current grid, a low-voltage fault or a high-voltage fault occurs in the alternating current grid due to a factor such as a short circuit of a transmission line between devices or a device fault. Usually, the alternating current grid includes an ABC three-phase alternating current (where the alternating current grid may also be referred to as a three-phase grid), and the three-phase alternating current (or a three-phase grid voltage) may be divided into positive-sequence, negative-sequence, and zero-sequence components according to a sequence of three phases ABC, where the positive-sequence component is as follows: The phase A leads the phase B by 120 degrees, the phase B leads the phase C by 120 degrees, and the phase C leads the phase A by 120 degrees. The negative-sequence component is as follows: The phase A lags behind the phase B by 120 degrees, the phase B lags behind the phase C by 120 degrees, and the phase C lags behind the phase A by 120 degrees. The zero-sequence component is as follows: The three phases A, B, and C are the same. In addition, in an alternating current, there is a phase difference between a current and a voltage. Therefore, the current may be divided into two parts based on vector analysis: an active current that is in the same phase as the voltage, and a reactive current that is 90 degrees ahead of or lagging behind the voltage. In other words, the current may be decomposed into an active component and a reactive component. With reference to the positive-sequence, negative-sequence, and zero-sequence components in the three-phase alternating current, a positive-sequence active current, a negative-sequence active current, a positive-sequence reactive current, a negative-sequence reactive current, or the like may be obtained from the alternating current through division. For example, the negative-sequence reactive current may be a negative-sequence component in the alternating current, and the reactive current obtained through decomposition based on the negative-sequence component. Faults are classified into a symmetric fault and an asymmetric fault based on whether the three-phase grid voltage is balanced when a fault occurs. The asymmetric fault may include three types: a single-phase grounding fault, a two-phase short-circuit grounding fault, and a two-phase inter-phase short-circuit fault. To implement continuous running of the power supply (such as the photovoltaic array or the wind turbine generator) without disconnecting from the grid and smoothly transit to a normal running state when a fault occurs in the alternating current grid (that is, a voltage or a frequency of a grid-connected point exceeds a normal running range allowed by a standard), the converter is required to have a fault ride through capability. The asymmetric fault is used as an example. When detecting that the asymmetric fault occurs (for example, by detecting a negative-sequence voltage value of a converter port, that is, a voltage value corresponding to a negative-sequence component of a voltage of the converter port, and determining, based on the negative-sequence voltage value, whether the asymmetric fault occurs), the converter may inject a negative-sequence reactive current into the alternating current grid, so that an unbalanced voltage in the asymmetric fault is restored to balance. The negative-sequence reactive current is a negative-sequence component in the alternating current, and is the reactive component in the negative-sequence component. However, when a grid-connected environment of the converter is a weak grid, the asymmetric fault occurs in the alternating current grid, the negative-sequence reactive current output by the converter obviously changes an imbalance degree of the voltage of the converter port (for example, a negative-sequence voltage is changed), and the changed voltage of the port interferes with asymmetric fault detection and negative-sequence reactive current control of the converter and even affects a running status of the converter. As a result, a converter asymmetric fault ride through state is repeatedly entered and exited in the weak-grid environment, and the current output by the converter repeatedly oscillates. The converter fails to output a stable negative-sequence reactive current within time required by the standard. This finally causes a converter fault ride through failure. FIG. 2a is a schematic diagram of repeatedly entering and exiting an asymmetric fault ride through state according to this application. As shown in FIG. 2a, when an asymmetric fault ride through flag is 1, it indicates that a converter triggers an asymmetric fault ride through state (which may be that the converter injects a negative-sequence reactive current into an alternating current grid); when an asymmetric fault ride through flag is 0, it indicates that a converter exits an asymmetric fault ride through state. During an asymmetric fault in FIG. 2a, the asymmetric fault ride through flag is switched for a plurality of times (switched between 0 and 1). In other words, in a weak-grid environment, the negative-sequence reactive current output by the converter changes an imbalance degree of a voltage of a converter port, interfering with asymmetric fault detection of the converter. As a result, the asymmetric fault ride through state of the converter is repeatedly entered and exited within short time. Further, FIG. 2b is a schematic diagram of a negative-sequence reactive current instruction and a feedback for a fault ride through failure according to this application. As shown in FIG. 2b, during the asymmetric fault, because the asymmetric fault ride through state is repeatedly entered and exited, the negative-sequence reactive current injected by the converter to the alternating current grid is unstable, that is, a negative-sequence reactive current instruction (which may be a ratio of a currently output negative-sequence reactive current to a rated negative-sequence reactive current) associated with the converter and a corresponding feedback value are unstable (returning to zero for a plurality of times). Further, FIG. 3 is a schematic diagram of a voltage and a current of a converter port with a fault ride through failure according to this application. As shown in FIG. 3, during an asymmetric fault (5s to 5.45s) in FIG. 3, in a process of repeatedly entering and exiting an asymmetric fault ride through state caused by interference with asymmetric fault detection of a converter, a voltage (which may be a three-phase line voltage) of a converter port and a current of the converter port repeatedly oscillate, indicating that a negative-sequence reactive current output by the converter in a weak-grid environment interferes with the converter, causing asymmetric fault ride through.

In the grid power supply system provided in this application, the converter includes a converting module and a fault ride through control module. The fault ride through control module is configured to: detect the asymmetric fault (which may be the single-phase grounding fault, the two-phase short-circuit grounding fault, or the two-phase inter-phase short-circuit fault) that occurs in the alternating current grid, and when detecting that the asymmetric fault occurs in the alternating current grid, obtain duration of previous fault ride through, that is, fault ride through duration of historical asymmetric fault ride through that is closest to current time. The fault ride through control module may control, based on the fault ride through duration, the converting module to inject the negative-sequence reactive current into the alternating current grid, and adjust, based on different fault ride through duration, a current value of the negative-sequence reactive current injected into the alternating current grid, to avoid a problem that asymmetric fault detection is interfered with because a negative-sequence reactive current with an excessively large current value changes the imbalance degree of the voltage of the converter port (for example, reducing the negative-sequence voltage of the converter port) in the weak-grid environment. The converter can inject the stable negative-sequence reactive current into the alternating current grid during the asymmetric fault, so that stability and security of grid power supplying in a weak-grid case are enhanced, and reliability and a success rate of grid fault restoration are high.

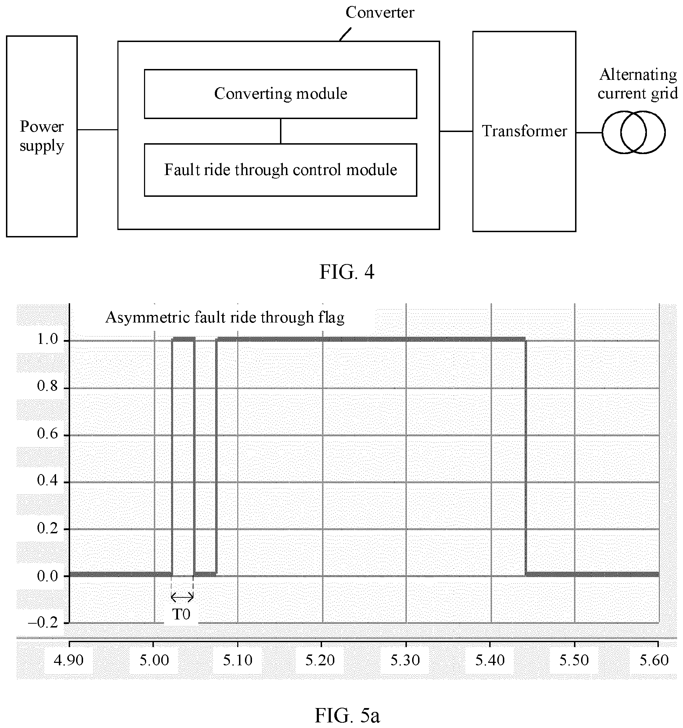

FIG. 4 is a schematic structural diagram of a grid power supply system according to this application. The grid power supply system shown in FIG. 4 includes a power supply, a converter, and a transformer. The power supply may be a solar cell panel, a wind turbine generator, an energy storage battery, or the like. An input end of the converter is coupled to the power supply in the grid power supply system, and an output end of the converter is coupled to an alternating current grid through the transformer. In the grid power supply system shown in FIG. 4, the power supply is configured to provide energy input or power input for the converter. The converter performs conversion based on the energy input or the power input provided by the power supply, and outputs, to the transformer, an alternating current obtained through the conversion. The transformer performs power conversion based on the input alternating current, and outputs, to the alternating current grid, an alternating current obtained through the power conversion, to supply power to the alternating current grid.

In some feasible implementations, in the grid power supply system shown in FIG. 4, the converter includes a converting module and a fault ride through control module. The converter may detect, through the ride through control module, an asymmetric fault (which may be a single-phase grounding fault, a two-phase short-circuit grounding fault, or a two-phase inter-phase short-circuit fault) that occurs in the alternating current grid, and when detecting that the asymmetric fault occurs in the alternating current grid, obtain fault ride through duration (for ease of description, fault ride through duration for short) of historical asymmetric fault ride through that is closest to current time and that occurs in the alternating current grid. The fault ride through control module may control, based on the fault ride through duration, the converting module to inject a negative-sequence reactive current into the alternating current grid, to avoid a problem that asymmetric fault detection is interfered with because a negative-sequence reactive current with an excessively large current value changes an imbalance degree of a voltage of a converter port (for example, reducing a negative-sequence voltage of the converter port) in a weak-grid environment. This ensures that the converter can inject the stable negative-sequence reactive current into the alternating current grid during the asymmetric fault, so that stability and security of grid power supplying in a weak-grid case are enhanced, and reliability of grid fault restoration is high.

The following describes, by using an example with reference to FIG. 5a to FIG. 6, the converter provided in embodiments of this application. In some feasible implementations, in a process in which the converter detects, via the fault ride through control module, the asymmetric fault that occurs in the alternating current grid, the fault ride through control module may detect a negative-sequence voltage (that is, a first negative-sequence voltage) at an output end of the converting module, where the first negative-sequence voltage may be a current negative-sequence component of an output end voltage of the converting module, and use the first negative-sequence voltage as an asymmetric fault parameter. If the first negative-sequence voltage exceeds a specified threshold, the ride through control module determines that the asymmetric fault occurs in the current alternating current grid. In other words, the fault ride through control module may detect the first negative-sequence voltage used as the asymmetric fault parameter, and determine that the asymmetric fault occurs in the current alternating current grid when the asymmetric fault parameter is greater than the specified threshold (which may be referred to as a fault determining threshold) corresponding to the first negative-sequence voltage. Optionally, the fault ride through control module may further detect a three-phase line voltage at the output end of the converting module, and use a difference between a maximum valid value and a minimum valid value of the three-phase line voltage (which may be a voltage between any two phases, for example, a voltage between a phase A and a phase B, a voltage between the phase A and a phase C, or a voltage between the phase B and the phase C) as an asymmetric fault parameter. If the difference between the maximum valid value and the minimum valid value of the three-phase line voltage exceeds a corresponding specified threshold (which may be referred to as a fault determining threshold), the fault ride through control module determines that the asymmetric fault occurs in the current alternating current grid. In addition, a difference between a maximum peak-to-peak value and a minimum peak-to-peak value of the three-phase line voltage or a difference between a maximum amplitude value and a minimum amplitude value of the three-phase line voltage may be used as an asymmetric fault parameter. This may be specifically determined based on an actual application scenario, and is not limited herein. Optionally, the fault ride through control module may further detect a three-phase phase voltage (which may be a phase-A voltage, a phase-B voltage, and a phase-C voltage) at the output end of the converting module, and use a difference between a maximum valid value and a minimum valid value of the three-phase phase voltage as an asymmetric fault parameter. If the difference between the maximum valid value and the minimum valid value of the three-phase phase voltage exceeds a corresponding specified threshold (which may be referred to as a fault determining threshold), the fault ride through control module determines that the asymmetric fault occurs in the current alternating current grid. In addition, a difference between a maximum peak-to-peak value and a minimum peak-to-peak value of the three-phase phase voltage or a difference between a maximum amplitude value and a minimum amplitude value of the three-phase phase voltage may be used as an asymmetric fault parameter. This may be specifically determined based on an actual application scenario, and is not limited herein. The fault ride through control module may obtain the asymmetric fault parameters by detecting the first negative-sequence voltage, the three-phase line voltage, or the three-phase phase voltage at the output end of the converting module. This may be specifically determined based on an actual application scenario, and is not limited herein. The fault ride through control module performs asymmetric fault detection on the alternating current grid based on the fault determining threshold corresponding to the asymmetric fault parameter, and may detect the fault immediately and perform asymmetric fault ride through when the asymmetric fault occurs in the alternating current grid, to ensure stability and security in a grid power supplying process.

In some feasible implementations, when detecting that the asymmetric fault occurs in the alternating current grid, the fault ride through control module may obtain duration of previous fault ride through, that is, obtain fault ride through duration (for ease of description, fault ride through duration for short) of historical asymmetric fault ride through that is closest to current time. Herein, when the fault ride through control module detects that the asymmetric fault occurs in the alternating current grid for the first time, that is, no asymmetric fault occurs in the alternating current grid before the current time, the fault ride through duration obtained by the fault ride through control module is null (null), and the fault ride through control module determines, based on a negative-sequence voltage (which may be a second negative-sequence voltage, that is, a negative-sequence component of an output end voltage of the converting module before the current asymmetric fault) and a negative-sequence reactive current (which may be a first negative-sequence reactive current, that is, a reactive current corresponding to a negative-sequence component of an output end current of the converting module before the current asymmetric fault) at the output end of the converting module that are detected before the current asymmetric fault, a rated voltage of the converter, a rated current of the converter, and the first negative-sequence voltage, a second negative-sequence reactive current value corresponding to a second negative-sequence reactive current injected into the alternating current grid, and controls the converting module to inject the second negative-sequence reactive current whose current value is equal to the second negative-sequence reactive current value into the alternating current grid. Optionally, when the fault ride through duration obtained by the fault ride through control module is not null, and the fault ride through duration is greater than or equal to a preset time threshold, a second negative-sequence reactive current value corresponding to a second negative-sequence reactive current injected into the alternating current grid is determined based on the second negative-sequence voltage, the first negative-sequence reactive current, the rated voltage of the converter, the rated current of the converter, and the first negative-sequence voltage, and the converting module is controlled to inject the second negative-sequence reactive current whose current value is equal to the second negative-sequence reactive current value into the alternating current grid. Herein, the fault ride through control module obtains the fault ride through duration of the latest asymmetric fault ride through, and injects a negative-sequence reactive current with a corresponding current value into the alternating current grid based on the fault ride through duration, to ensure that the converter can inject the stable negative-sequence reactive current into the alternating current grid during the asymmetric fault, so that stability and security of grid power supplying in the weak-grid case are enhanced.

In some feasible implementations, the second negative-sequence reactive current determined by the fault ride through control module may be represented as:

$$Iqn2 = Iqn1 + K * In * \frac{(U2 - U1)}{Un}$$

U2 is the second negative-sequence voltage, Iqn1 is the first negative-sequence reactive current, Un is the rated voltage of the converter, In is the rated current of the converter, U1 is the first negative-sequence voltage, K is an adjustment coefficient (which may be a positive number, for example, 0<K<10), and Iqn2 is the second negative-sequence reactive current. The fault ride through control module may obtain, according to the foregoing expression, the second negative-sequence reactive current value corresponding to the second negative-sequence reactive current injected into the alternating current grid, and control the converting module to inject the second negative-sequence reactive current whose current value is equal to the second negative-sequence reactive current value into the alternating current grid.

In some feasible implementations, when detecting that the asymmetric fault occurs in the alternating current grid, the fault ride through control module may obtain fault ride through duration of historical asymmetric fault ride through that is closest to current time. When the fault ride through duration is null, or the fault ride through duration is greater than or equal to a preset time threshold, the fault ride through control module obtains, based on a first negative-sequence reactive current at the output end of the converting module detected before the current asymmetric fault, the fault determining threshold, a rated voltage of the converter, a rated current of the converter, and the first negative-sequence voltage, a second negative-sequence reactive current value corresponding to a second negative-sequence reactive current injected into the alternating current grid, and controls the converting module to inject the second negative-sequence reactive current whose current value is equal to the second negative-sequence reactive current value into the alternating current grid. It may be understood that, when the first negative-sequence voltage is used as the asymmetric fault parameter, the fault determining threshold is the fault determining threshold corresponding to the first negative-sequence voltage. Similarly, when the difference between the maximum valid value and the minimum valid value (or the difference between the maximum peak-to-peak value and the minimum peak-to-peak value or the difference between the maximum amplitude value and the minimum amplitude value) of the three-phase line voltage (or the three-phase phase voltage) is used as the asymmetric fault parameter, the fault determining threshold is a fault determining threshold corresponding to the difference. The fault ride through control module obtains the fault ride through duration of the latest asymmetric fault ride through, and injects a negative-sequence reactive current with a corresponding current value into the alternating current grid based on the fault ride through duration, to ensure that the converter can inject the stable negative-sequence reactive current into the alternating current grid during the asymmetric fault, so that stability and security of grid power supplying in the weak-grid case are enhanced.

In some feasible implementations, the second negative-sequence reactive current determined by the fault ride through control module may be represented as:

$$Iqn2 = Iqn1 + K * In * \frac{(Unv - U1)}{Un}$$

Iqn1 is the first negative-sequence reactive current, Unv is the fault determining threshold, Un is the rated voltage of the converter, In is the rated current of the converter, U1 is the first negative-sequence voltage, K is an adjustment coefficient (which may be a positive number, for example, 0<K<10), and Iqn2 is the second negative-sequence reactive current. The fault ride through control module may obtain, according to the foregoing expression, the second negative-sequence reactive current value corresponding to the second negative-sequence reactive current injected into the alternating current grid, and control the converting module to inject the second negative-sequence reactive current whose current value is equal to the second negative-sequence reactive current value into the alternating current grid.

In some feasible implementations, when detecting that the asymmetric fault occurs in the alternating current grid, the fault ride through control module may obtain fault ride through duration of historical asymmetric fault ride through that is closest to current time. When the fault ride through duration is less than a preset time threshold, the fault ride through control module determines, based on a second negative-sequence voltage and a first negative-sequence reactive current at the output end of the converting module that are detected before the current asymmetric fault, a rated voltage of the converter, a rated current of the converter, and the first negative-sequence voltage, a second negative-sequence reactive current value corresponding to a second negative-sequence reactive current, obtains a third negative-sequence reactive current value based on the second negative-sequence reactive current value, and controls the converting module to inject a third negative-sequence reactive current whose current value is equal to the third negative-sequence reactive current value into the alternating current grid. Herein, a current absolute value of the third negative-sequence reactive current is less than a current absolute value of the second negative-sequence reactive current, that is, the third negative-sequence reactive current may be represented as:

$$Iqn3 = Iqn2 - \Delta Iqn$$

Iqn2 is the second negative-sequence reactive current, Iqn3 is the third negative-sequence reactive current, and $0 < |\Delta Iqn| < |Iqn2|$. When the fault ride through duration is less than the preset time threshold, the fault ride through control module reduces the value of the negative-sequence reactive current injected into the alternating current grid, to avoid interference with asymmetric fault detection caused because the negative-sequence reactive current output by the converter in the weak-grid environment reduces the negative-sequence voltage of the converter port, and ensure that the converter can inject the stable negative-sequence reactive current into the alternating current grid during the asymmetric fault.

In some feasible implementations, when detecting that the asymmetric fault occurs in the alternating current grid, the fault ride through control module may obtain fault ride through duration of historical asymmetric fault ride through that is closest to current time. When the fault ride through duration is less than a preset time threshold, the fault ride through control module determines, based on a first negative-sequence reactive current at the output end of the converting module detected before the current asymmetric fault, the fault determining threshold, a rated voltage of the converter, a rated current of the converter, and the first negative-sequence voltage, a second negative-sequence reactive current value corresponding to a second negative-sequence reactive current, obtains a third negative-sequence reactive current value based on the second negative-sequence reactive current value, and controls the converting module to inject a third negative-sequence reactive current whose current value is equal to the third negative-sequence reactive current value into the alternating current grid. Herein, a current absolute value of the third negative-sequence reactive current is less than a current absolute value of the second negative-sequence reactive current. When the fault ride through duration is less than the preset time threshold, the fault ride through control module reduces the value of the negative-sequence reactive current injected into the alternating current grid, to avoid interference with asymmetric fault detection caused because the negative-sequence reactive current output by the converter in the weak-grid environment reduces the negative-sequence voltage of the converter port, and ensure that the converter can inject the stable negative-sequence reactive current into the alternating current grid during the asymmetric fault.

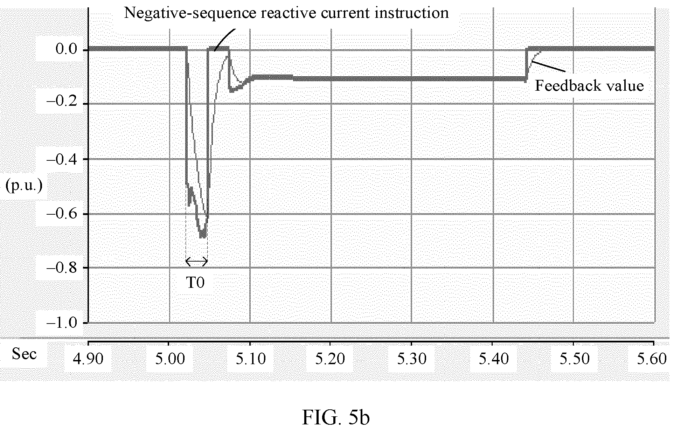

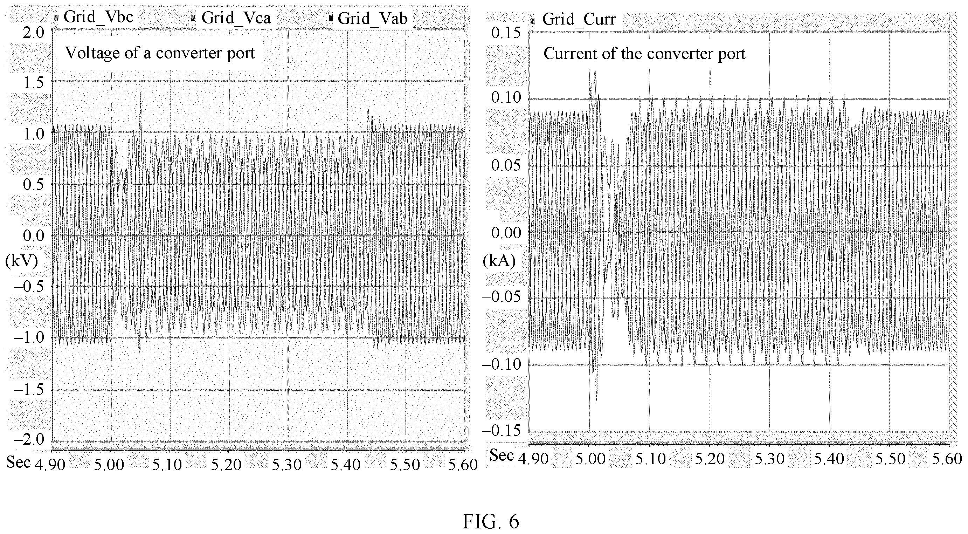

FIG. 5a is a schematic diagram of stability of an asymmetric fault ride through state according to this application. As shown in FIG. 5a, when an asymmetric fault ride through flag is 1, it indicates that a converter triggers an asymmetric fault ride through state (which may be that the converter injects a negative-sequence reactive current into an alternating current grid); when an asymmetric fault ride through flag is 0, it indicates that a converter exits an asymmetric fault ride through state. FIG. 5a includes two times of asymmetric fault ride through. In a process of the second time of asymmetric fault ride through, a fault ride through control module obtains fault ride through duration (which may be 5.02s to 5.06s, and the fault ride through duration is represented as T0) corresponding to the first time of asymmetric fault ride through, and T0 is less than a preset time threshold. In this case, a third negative-sequence reactive current value with a smaller current value is obtained based on a second negative-sequence reactive current value, and a converting module is controlled to inject a third negative-sequence reactive current into the alternating current grid. During the second time of asymmetric fault ride through (which may be 5.08s to 5.44s), the asymmetric fault ride through state is stable (where the asymmetric fault ride through flag remains 1). Further, FIG. 5b is a schematic diagram of a negative-sequence reactive current instruction and a feedback for an asymmetric fault ride through success according to this application. As shown in FIG. 5b, FIG. 5b also includes two times of asymmetric fault ride through, and fault ride through duration T0 corresponding to the first time of asymmetric fault ride through is less than a preset time threshold. In this case, the fault ride through control module injects the third negative-sequence reactive current with the smaller current value into the alternating current grid during the second time of asymmetric fault ride through (which may be 5.08s to 5.44s), so that the asymmetric fault ride through state is stable (where a negative-sequence reactive current instruction and a corresponding feedback value remain unchanged). The fault ride through duration T0 corresponding to the first time of asymmetric fault ride through is less than the preset time threshold, indicating that the negative-sequence reactive current injected into the alternating current grid in a process of the first asymmetric fault ride through is excessively large. As a result, a negative-sequence voltage of a converter port is reduced to interfere with asymmetric fault detection of the fault ride through control module and exit the asymmetric fault ride through state quickly. The fault ride through control module adjusts, based on the fault ride through duration T0, the negative-sequence reactive current (adjusts the second negative-sequence reactive current to the smaller third negative-sequence reactive current downward) injected into the alternating current grid, to ensure that the converter can inject the stable negative-sequence reactive current into the alternating current grid during the asymmetric fault. Further, FIG. 6 is a schematic diagram of a voltage and a current of a converter port with a fault ride through success according to this application. As shown in FIG. 6, during an asymmetric fault (5s to 5.45s) in FIG. 6, a fault ride through control module detects that a negative-sequence reactive current injected into an alternating current grid in a process of the first time of asymmetric fault ride through is excessively large (where fault ride through duration is less than a preset time threshold), and adjusts the negative-sequence reactive current injected into the alternating current grid, so that the stable negative-sequence reactive current can be injected into the alternating current grid, and a voltage (which may be a three-phase line voltage) of a converter port and a current of the converter port remain stable after oscillation, the asymmetric fault ride through is highly reliable.

In this application, the converter in the grid power supply system includes the converting module and the fault ride through control module. The fault ride through control module may detect the asymmetric fault that occurs in the alternating current grid (where the first negative-sequence voltage, the three-phase line voltage, or the three-phase phase voltage at the output end of the converting module may be detected to detect whether the asymmetric fault occurs). When detecting that the asymmetric fault occurs in the alternating current grid, the fault ride through control module may obtain the duration of the previous fault ride through, that is, obtain the fault ride through duration of the historical asymmetric fault ride through that is closest to the current time, and when the fault ride through duration is null, or the fault ride through duration is greater than or equal to the preset time threshold, determine the second negative-sequence reactive current value corresponding to the second negative-sequence reactive current injected into the alternating current grid, and control the converting module to inject the second negative-sequence reactive current whose current value is equal to the second negative-sequence reactive current value into the alternating current grid. When the fault ride through duration is less than the preset time threshold, the fault ride through control module determines the second negative-sequence reactive current value corresponding to the second negative-sequence reactive current, obtains the third negative-sequence reactive current value based on the second negative-sequence reactive current value, and controls the converting module to inject the third negative-sequence reactive current whose current value is equal to the third negative-sequence reactive current value into the alternating current grid. Herein, the current absolute value of the third negative-sequence reactive current is less than the current absolute value of the second negative-sequence reactive current. The fault ride through control module adjusts, based on different fault ride through duration, the current value of the negative-sequence reactive current injected into the alternating current grid, to avoid a problem that asymmetric fault detection is interfered with because the negative-sequence reactive current with the excessively large current value reduces the negative-sequence voltage of the converter port in the weak-grid environment. The converter can inject the stable negative-sequence reactive current into the alternating current grid during the asymmetric fault, so that stability and security of grid power supplying in a weak-grid case are enhanced, and reliability of grid fault restoration is high.

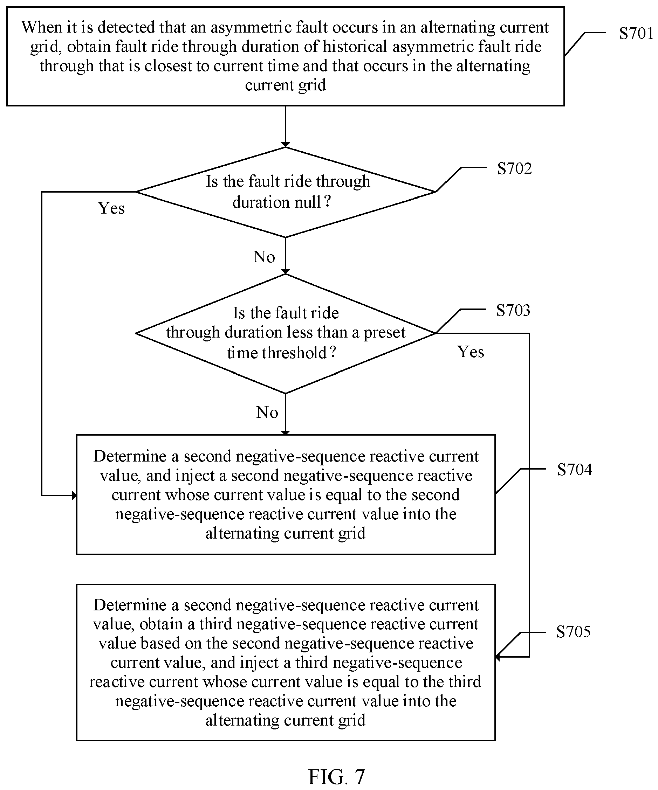

FIG. 7 is a schematic flowchart of a converter control method in a grid power supply system according to this application. The converter control method in the grid power supply system provided in this application is applicable to the converter in any one of the grid power supply systems shown in FIG. 1 to FIG. 6. The converter includes a converting module and a fault ride through control module. An input end of the converter is coupled to a power supply in the grid power supply system, and an output end of the converter is coupled to an alternating current grid. As shown in FIG. 7, the converter control method in the grid power supply system provided in this application includes the following steps.

S701: When it is detected that an asymmetric fault occurs in the alternating current grid, obtain fault ride through duration of historical asymmetric fault ride through that is closest to current time and that occurs in the alternating current grid.

In some feasible implementations, the converter detects a negative-sequence voltage (that is, a first negative-sequence voltage) at an output end of the converting module via the fault ride through control module, and uses the first negative-sequence voltage as an asymmetric fault parameter. If the first negative-sequence voltage exceeds a fault determining threshold, the ride through control module determines that the asymmetric fault occurs in the current alternating current grid. Optionally, the fault ride through control module may further detect a three-phase line voltage at the output end of the converting module, and use a difference between a maximum valid value and a minimum valid value of the three-phase line voltage (which may be a voltage between any two phases) as an asymmetric fault parameter. If the difference between the maximum valid value and the minimum valid value of the three-phase line voltage exceeds a corresponding fault determining threshold, the fault ride through control module determines that the asymmetric fault occurs in the current alternating current grid. In addition, a difference between a maximum peak-to-peak value and a minimum peak-to-peak value of the three-phase line voltage or a difference between a maximum amplitude value and a minimum amplitude value of the three-phase line voltage may be used as an asymmetric fault parameter. This may be specifically determined based on an actual application scenario, and is not limited herein. Optionally, the fault ride through control module may further detect a three-phase phase voltage at the output end of the converting module, and use a difference between a maximum valid value and a minimum valid value of the three-phase phase voltage as an asymmetric fault parameter. If the difference between the maximum valid value and the minimum valid value of the three-phase phase voltage exceeds a corresponding fault determining threshold, the fault ride through control module determines that the asymmetric fault occurs in the current alternating current grid. In addition, a difference between a maximum peak-to-peak value and a minimum peak-to-peak value of the three-phase phase voltage or a difference between a maximum amplitude value and a minimum amplitude value of the three-phase phase voltage may be used as an asymmetric fault parameter. This may be specifically determined based on an actual application scenario, and is not limited herein. Asymmetric fault detection is performed on the alternating current grid based on the fault determining threshold corresponding to the asymmetric fault parameter, and the fault may be detected immediately and asymmetric fault ride through may be performed when the asymmetric fault occurs in the alternating current grid, to ensure stability and security in a grid power supplying process.

In some feasible implementations, when detecting that the asymmetric fault occurs in the alternating current grid, the converter obtains duration of previous fault ride through via the fault ride through control module, that is, obtains the fault ride through duration (for ease of description, fault ride through duration for short) of the historical asymmetric fault ride through that is closest to the current time. Refer to FIG. 5a again. FIG. 5a includes two times of asymmetric fault ride through, and the second time of asymmetric fault ride through is used as an example. In a process of the second time of asymmetric fault ride through, the fault ride through control module obtains fault ride through duration T0 (which may be 5.02s to 5.06s) corresponding to the first time of asymmetric fault ride through. The fault ride through control module obtains the fault ride through duration of the latest asymmetric fault ride through, and injects a negative-sequence reactive current of a corresponding current value into the alternating current grid based on the fault ride through duration, to avoid an excessively large current value corresponding to the negative-sequence reactive current injected into the alternating current grid, and avoid interference with asymmetric fault detection caused because the negative-sequence reactive current reduces a negative-sequence voltage of a converter port.

S702: Determine whether the fault ride through duration is null, and if a determining result is yes, perform step S704, or if a determining result is no, perform step S703.

S703: Determine whether the fault ride through duration is less than a preset time threshold, and if a determining result is yes, perform step S705, or if a determining result is no, perform step S704.

S704: Determine a second negative-sequence reactive current value, and inject a second negative-sequence reactive current whose current value is equal to the second negative-sequence reactive current value into the alternating current grid.

In some feasible implementations, when the fault ride through control module detects that the asymmetric fault occurs in the alternating current grid for the first time, that is, no asymmetric fault occurs in the alternating current grid before the current time, the fault ride through duration obtained by the fault ride through control module is null (null), and the fault ride through control module determines, based on a negative-sequence voltage (which may be a second negative-sequence voltage) and a negative-sequence reactive current (which may be a first negative-sequence reactive current) at the output end of the converting module that are detected before the current asymmetric fault, a rated voltage of the converter, a rated current of the converter, and the first negative-sequence voltage, the second negative-sequence reactive current value corresponding to the second negative-sequence reactive current injected into the alternating current grid, and controls the converting module to inject the second negative-sequence reactive current whose current value is equal to the second negative-sequence reactive current value into the alternating current grid. Alternatively, when the fault ride through duration obtained by the fault ride through control module is not null, and the fault ride through duration is greater than or equal to the preset time threshold, the second negative-sequence reactive current value corresponding to the second negative-sequence reactive current injected into the alternating current grid is determined based on the second negative-sequence voltage, the first negative-sequence reactive current, the rated voltage of the converter, the rated current of the converter, and the first negative-sequence voltage, and the converting module is controlled to inject the second negative-sequence reactive current whose current value is equal to the second negative-sequence reactive current value into the alternating current grid. Specifically, the second negative-sequence reactive current determined by the fault ride through control module may be represented as:

$$Iqn2 = Iqn1 + K * In * \frac{(U2 - U1)}{Un}$$

U2 is the second negative-sequence voltage, Iqn1 is the first negative-sequence reactive current, Un is the rated voltage of the converter, In is the rated current of the converter, U1 is the first negative-sequence voltage, K is an adjustment coefficient (which may be a positive number, for example, 0<K<10), and Iqn2 is the second negative-sequence reactive current. The fault ride through control module obtains, according to the foregoing expression, the second negative-sequence reactive current value corresponding to the second negative-sequence reactive current injected into the alternating current grid, and controls the converting module to inject the second negative-sequence reactive current whose current value is equal to the second negative-sequence reactive current value into the alternating current grid.

In some feasible implementations, when the fault ride through duration is null, or the fault ride through duration is greater than or equal to the preset time threshold, the second negative-sequence reactive current value corresponding to the second negative-sequence reactive current injected into the alternating current grid may be alternatively determined based on the first negative-sequence reactive current at the output end of the converting module detected before the current asymmetric fault, the fault determining threshold, the rated voltage of the converter, the rated current of the converter, and the first negative-sequence voltage, and the fault ride through control module controls the converting module to inject the second negative-sequence reactive current whose current value is equal to the second negative-sequence reactive current value into the alternating current grid. Herein, when the first negative-sequence voltage is used as the asymmetric fault parameter, the fault determining threshold is the fault determining threshold corresponding to the first negative-sequence voltage. Similarly, when the difference between the maximum valid value and the minimum valid value (or the difference between the maximum peak-to-peak value and the minimum peak-to-peak value or the difference between the maximum amplitude value and the minimum amplitude value) of the three-phase line voltage (or the three-phase phase voltage) is used as the asymmetric fault parameter, the fault determining threshold is a fault determining threshold corresponding to the difference. Specifically, the second negative-sequence reactive current determined by the fault ride through control module may be represented as:

$$Iqn2 = Iqn1 + K * ln * \frac{(Unv - U1)}{Un}$$

Iqn1 is the first negative-sequence reactive current, Unv is the fault determining threshold, Un is the rated voltage of the converter, In is the rated current of the converter, U1 is the first negative-sequence voltage, K is an adjustment coefficient (which may be a positive number, for example, $0<K<10$), and Iqn2 is the second negative-sequence reactive current. The fault ride through control module may obtain, according to the foregoing expression, the second negative-sequence reactive current value corresponding to the second negative-sequence reactive current injected into the alternating current grid, and control the converting module to inject the second negative-sequence reactive current whose current value is equal to the second negative-sequence reactive current value into the alternating current grid. The fault ride through control module adjusts, based on different fault ride through duration, a current value of the negative-sequence reactive current injected into the alternating current grid, to ensure that the converter can inject the stable negative-sequence reactive current into the alternating current grid during the asymmetric fault, so that stability and security of grid power supplying in a weak-grid case are enhanced.

S705: Determine the second negative-sequence reactive current value, obtain a third negative-sequence reactive current value based on the second negative-sequence reactive current value, and inject a third negative-sequence reactive current whose current value is equal to the third negative-sequence reactive current value into the alternating current grid.

In some feasible implementations, when the fault ride through duration is less than the preset time threshold, the second negative-sequence reactive current value corresponding to the second negative-sequence reactive current is determined based on the second negative-sequence voltage and the first negative-sequence reactive current at the output end of the converting module that are detected before the current asymmetric fault, the rated voltage of the converter, the rated current of the converter, and the first negative-sequence voltage, the third negative-sequence reactive current value is obtained based on the second negative-sequence reactive current value, and the converting module is controlled to inject the third negative-sequence reactive current whose current value is equal to the third negative-sequence reactive current value into the alternating current grid. Specifically, the third negative-sequence reactive current may be represented as:

$$Iqn3 = Iqn2 - \Delta Iqn$$

Iqn2 is the second negative-sequence reactive current, Iqn3 is the third negative-sequence reactive current, and $0 < |\Delta Iqn| < |Iqn2|$. Herein, the second negative-sequence reactive current Iqn2 may be determined and obtained based on the second negative-sequence voltage, the first negative-sequence reactive current, the rated voltage of the converter, the rated current of the converter, and the first negative-sequence voltage, or may be determined and obtained based on the first negative-sequence reactive current, the fault determining threshold, the rated voltage of the converter, the rated current of the converter, and the first negative-sequence voltage. When the fault ride through duration is less than the preset time threshold, the fault ride through control module reduces the value of the negative-sequence reactive current injected into the alternating current grid, to avoid interference with asymmetric fault detection caused because the negative-sequence reactive current output by the converter in the weak-grid environment reduces the negative-sequence voltage of the converter port, and ensure that the stable negative-sequence reactive current can be injected into the alternating current grid during the asymmetric fault.

In this application, the converter may detect, via the fault ride through control module, the asymmetric fault that occurs in the alternating current grid (where the first negative-sequence voltage, the three-phase line voltage, or the three-phase phase voltage at the output end of the converting module may be detected to detect whether the asymmetric fault occurs). When detecting that the asymmetric fault occurs in the alternating current grid, the fault ride through control module may obtain the fault ride through duration of the historical asymmetric fault ride through that is closest to the current time, and when the fault ride through duration is null, or the fault ride through duration is greater than or equal to the preset time threshold, determine the second negative-sequence reactive current value corresponding to the second negative-sequence reactive current injected into the alternating current grid, and control the converting module to inject the second negative-sequence reactive current whose current value is equal to the second negative-sequence reactive current value into the alternating current grid. When the fault ride through duration is less than the preset time threshold, the fault ride through control module determines the second negative-sequence reactive current value corresponding to the second negative-sequence reactive current, obtains the third negative-sequence reactive current value based on the second negative-sequence reactive current value, and controls the converting module to inject the third negative-sequence reactive current whose current value is equal to the third negative-sequence reactive current value into the alternating current grid. Herein, a current absolute value of the third negative-sequence reactive current is less than a current absolute value of the second negative-sequence reactive current. The converter adjusts, via the fault ride through control module based on different fault ride through duration, the current value of the negative-sequence reactive current injected into the alternating current grid, to avoid a problem that asymmetric fault detection is interfered with because the negative-sequence reactive current with the excessively large current value reduces the negative-sequence voltage of the converter port in the weak-grid environment. The converter can inject the stable negative-sequence reactive current into the alternating current grid during the asymmetric fault, so that stability and security of grid power supplying in the weak-grid case are enhanced, and reliability of grid fault restoration is high.

**Claims**

1. A converter for a grid power supply system, an input end of the converter is coupled to a power supply in the grid power supply system, an output end of the converter is coupled to an alternating current grid, and the converter comprises a converting module and a fault ride through control module; and

   the fault ride through control module is configured to: when an asymmetric fault parameter of the alternating current grid is greater than a fault determining threshold, control the converting module to inject a negative-sequence reactive current into the alternating current grid, wherein the asymmetric fault parameter comprises one of a first negative-sequence voltage, a difference between a maximum valid value and a corresponding minimum valid value of a three-phase line voltage, a difference between a maximum peak-to-peak value and a corresponding minimum peak-to-peak value of the three-phase line voltage, a difference between a maximum amplitude value and a corresponding minimum amplitude value of the three-phase line voltage, a difference between a maximum valid value and a corresponding minimum valid value of a three-phase phase voltage, a difference between a maximum peak-to-peak value and a corresponding minimum peak-to-peak value of the three-phase phase voltage, or a difference between a maximum amplitude value and a corresponding minimum amplitude value of the three-phase phase voltage,
   **characterised in that**

the fault ride through module is configured to control the converting module based on fault ride through duration of historical asymmetric fault ride through that is closest to current time and that occurs in the alternating current grid.

2. The converter according to claim 1, wherein the fault ride through control module is further configured to: when the fault ride through duration is null or the fault ride through duration is greater than or equal to a preset time threshold, obtain a second negative-sequence reactive current value based on a second negative-sequence voltage and a first negative-sequence reactive current that are used before a current asymmetric fault occurs in the alternating current grid, a rated voltage of the converter, a rated current of the converter, and the first negative-sequence voltage, and control the converting module to inject a second negative-sequence reactive current whose current value is equal to the second negative-sequence reactive current value into the alternating current grid.

3. The converter according to claim 1, wherein the fault ride through control module is further configured to: when the fault ride through duration is null or the fault ride through duration is greater than or equal to a preset time threshold, obtain a second negative-sequence reactive current value based on a first negative-sequence reactive current used before a current asymmetric fault occurs in the alternating current grid, the fault determining threshold, a rated voltage of the converter, a rated current of the converter, and the first negative-sequence voltage, and control the converting module to inject a second negative-sequence reactive current whose current value is equal to the second negative-sequence reactive current value into the alternating current grid.

4. The converter according to claim 2, wherein the fault ride through control module is further configured to: when the fault ride through duration is less than a preset time threshold, obtain a second negative-sequence reactive current value based on a second negative-sequence voltage and a first negative-sequence reactive current that are used before a current asymmetric fault occurs in the alternating current grid, a rated voltage of the converter, a rated current of the converter, and the first negative-sequence voltage, obtain a third negative-sequence reactive current value based on the second negative-sequence reactive current value, and control the converting module to inject a third negative-sequence reactive current whose current value is equal to the third negative-sequence reactive current value into the alternating current grid, wherein a current absolute value of the third negative-sequence reactive current is less than a current absolute value of the second negative-sequence reactive current.

5. The converter according to claim 2, wherein the fault ride through control module is further configured to: when the fault ride through duration is less than a preset time threshold, obtain a second negative-sequence reactive current value based on a first negative-sequence reactive current used before a current asymmetric fault occurs in the alternating current grid, the fault determining threshold, a rated voltage of the converter, a rated current of the converter, and the first negative-sequence voltage, obtain a third negative-sequence reactive current value based on the second negative-sequence reactive current value, and control the converting module to inject a third negative-sequence reactive current whose current value is equal to the third negative-sequence reactive current value into the alternating current grid, wherein a current absolute value of the third negative-sequence reactive current is less than a current absolute value of the second negative-sequence reactive current.

6. The converter according to claim 2 or 4, wherein the second negative-sequence reactive current satisfies:

$$Iqn2 = Iqn1 + K * In * \frac{(U2 - U1)}{Un},$$

wherein
U2 is the second negative-sequence voltage, Iqn1 is the first negative-sequence reactive current, Un is the rated voltage of the converter, In is the rated current of the converter, U1 is the first negative-sequence voltage, K is a positive number, and Iqn2 is the second negative-sequence reactive current.

7. The converter according to claim 3 or 5, wherein the second negative-sequence reactive current satisfies:

$$Iqn2 = Iqn1 + K * In * \frac{(Unv - U1)}{Un},$$

wherein
Iqn1 is the first negative-sequence reactive current, Unv is the fault determining threshold, Un is the rated voltage of the converter, In is the rated current of the converter, U1 is the first negative-sequence voltage, K is a positive number, and Iqn2 is the second negative-sequence reactive current.

8. A grid power supply system, wherein the grid power supply system comprises a power supply, a transformer, and the converter according to any one of claims 1 to 7, wherein

the power supply is configured to provide energy input or power input for the converter,
the converter is configured to: perform conversion based on the energy input or the power input provided by the power supply, to obtain a first alternating current, and output the first alternating current to the transformer,
the transformer is configured to: perform power conversion based on the first alternating current, and output a second alternating current to the alternating current grid; and
the converter is further configured to: when an asymmetric fault occurs in the alternating current grid, inject a negative-sequence reactive current into the alternating current grid based on fault ride through duration of historical asymmetric fault ride through that is closest to current time and that occurs in the alternating current grid.

9. The grid power supply system according to claim 8, wherein the power supply comprises at least one of a solar cell panel, a wind turbine generator, or an energy storage battery.

10. A converter control method for a grid power supply system, wherein the method is applicable to a converter in the grid power supply system, the grid power supply system comprises a power supply, a transformer, and the converter, an input end of the converter is coupled to the power supply, an output end of the converter is coupled to an alternating current grid through the transformer, the converter comprises a converting module and a fault ride through control module, and the method comprises:
when an asymmetric fault parameter of the alternating current grid is greater than a fault determining threshold, controlling, by the fault ride through control module based on fault ride through duration of historical asymmetric fault ride through that is closest to current time and that occurs in the alternating current grid, the converting module to inject a negative-sequence reactive current into the alternating current grid, wherein the asymmetric fault parameter comprises one of a first negative-sequence voltage, a difference between a maximum valid value and a corresponding minimum valid value of a three-phase line voltage, a difference between a maximum peak-to-peak value and a corresponding minimum peak-to-peak value of the three-phase line voltage, a difference between a maximum amplitude value and a corresponding minimum amplitude value of the three-phase line voltage, a difference between a maximum valid value and a corresponding minimum valid value of a three-phase phase voltage, or a difference between a maximum peak-to-peak value and a corresponding minimum peak-to-peak value of the three-phase phase voltage.

11. The method according to claim 10, wherein the controlling, by the fault ride through control module based on fault ride through duration of historical asymmetric fault ride through that is closest to current time and that occurs in the alternating current grid, the converting module to inject a negative-sequence reactive current into the alternating current grid comprises:
when the fault ride through duration is null or the fault ride through duration is greater than or equal to a preset time threshold, obtaining, by the fault ride through control module, a second negative-sequence reactive current value based on a second negative-sequence voltage and a first negative-sequence reactive current that are used before a current asymmetric fault occurs in the alternating current grid, a rated voltage of the converter, a rated current of the converter, and the first negative-sequence voltage, and controlling the converting module to inject a second negative-sequence reactive current whose current value is equal to the second negative-sequence reactive current value into the alternating current grid.

12. The method according to claim 10, wherein the controlling, by the fault ride through control module based on fault ride through duration of historical asymmetric fault ride through that is closest to current time and that occurs in the alternating current grid, the converting module to inject a negative-sequence reactive current into the alternating current grid comprises:
when the fault ride through duration is null or the fault ride through duration is greater than or equal to a preset time threshold, obtaining, by the fault ride through control module, a second negative-sequence reactive current value based on a first negative-sequence reactive current used before a current asymmetric fault occurs in the alternating current grid, the fault determining threshold, a rated voltage of the converter, a rated current of the converter, and the first negative-sequence voltage, and controlling the converting module to inject a second negative-sequence reactive current whose current value is equal to the second negative-sequence reactive current value into the alternating current grid.

13. The method according to claim 10, wherein the controlling, by the fault ride through control module based on fault ride through duration of historical asymmetric fault ride through that is closest to current time and that occurs in the alternating current grid, the converting module to inject a negative-sequence reactive current into the alternating current grid comprises:
when the fault ride through duration is less than a preset time threshold, obtaining, by the fault ride through control module, a second negative-sequence reactive current value based on a second negative-sequence voltage and a first negative-sequence reactive current that are used before a current asymmetric fault occurs in the alternating current grid, a rated voltage of the converter, a rated current of the converter, and the first negative-sequence voltage, obtaining a third negative-sequence reactive current value based on the second negative-sequence reactive current value, and controlling the converting module to inject a third negative-sequence reactive current whose current value is equal to the third negative-sequence reactive current value into the alternating current grid, wherein a current absolute value of the third negative-sequence reactive current is less than a current absolute value of the second negative-sequence reactive current.

14. The method according to claim 10, wherein the controlling, by the fault ride through control module based on fault ride through duration of historical asymmetric fault ride through that is closest to current time and that occurs in the alternating current grid, the converting module to inject a negative-sequence reactive current into the alternating current grid comprises:
when the fault ride through duration is less than a preset time threshold, obtaining, by the fault ride through control module, a second negative-sequence reactive current value based on a first negative-sequence reactive current used before a current asymmetric fault occurs in the alternating current grid, the fault determining threshold, a rated voltage of the converter, a rated current of the converter, and the first negative-sequence voltage, obtaining a third negative-sequence reactive current value based on the second negative-sequence reactive current value, and controlling the converting module to inject a third negative-sequence reactive current whose current value is equal to the third negative-sequence reactive current value into the alternating current grid, wherein a current absolute value of the third negative-sequence reactive current is less than a current absolute value of the second negative-sequence reactive current.

**Patentansprüche**

1. Wandler für ein Netzstromversorgungssystem, wobei ein Eingangsende des Wandlers an eine Stromversorgung in dem Netzstromversorgungssystem gekoppelt ist, ein Ausgangsende des Wandlers an ein Wechselstromnetz gekoppelt ist und der Wandler ein Umwandlungsmodul und ein Fehlerdurchlauf-Steuerungsmodul umfasst; und

das Fehlerdurchlauf-Steuerungsmodul zu Folgendem konfiguriert ist: wenn ein asymmetrischer Fehlerparameter des Wechselstromnetzes größer als ein Fehlerbestimmungsschwellenwert ist, Steuern des Umwandlungsmoduls derart, dass es einen Gegensystemblindstrom in das Wechselstromnetz einspeist, wobei der asymmetrische Fehlerparameter eines von Folgenden umfasst: einer ersten Gegensystemspannung, einer Differenz zwischen einem maximal gültigen Wert und einem entsprechenden minimal gültigen Wert einer dreiphasigen Leitungsspannung, einer Differenz zwischen einem maximalen Spitze-Spitze-Wert und einem entsprechenden minimalen Spitze-Spitze-Wert der dreiphasigen Leitungsspannung, einer Differenz zwischen einem maximalen Amplitudenwert und einem entsprechenden minimalen Amplitudenwert der dreiphasigen Leitungsspannung, einer Differenz zwischen einem maximal gültigen Wert und einem entsprechenden minimal gültigen Wert einer dreiphasigen Phasenspannung, einer Differenz zwischen einem maximalen Spitze-Spitze-Wert und einem entsprechenden minimalen Spitze-Spitze-Wert der dreiphasigen Phasenspannung oder einer Differenz zwischen einem maximalen Amplitudenwert und einem entsprechenden minimalen Amplitudenwert der dreiphasigen Phasenspannung,
**dadurch gekennzeichnet, dass**
das Fehlerdurchlaufmodul dazu konfiguriert ist, das Umwandlungsmodul auf Grundlage der Fehlerdurchlaufdauer des asymmetrischen Fehlerdurchlaufs aus dem Verlauf zusteuern, welcher der aktuellen Zeit am nächsten kommt und der in dem Wechselstromnetz auftritt.

2. Wandler nach Anspruch 1, wobei das Fehlerdurchlauf-Steuerungsmodul ferner zu Folgendem konfiguriert ist: wenn die Fehlerdurchlaufdauer null ist oder die Fehlerdurchlaufdauer größer als ein voreingestellter Zeitschwellenwert oder gleich diesem ist, Erlangen eines zweiten Gegensystemblindstromwertes auf Grundlage einer zweiten Gegensystemspannung und eines ersten Gegensystemblindstroms, die verwendet werden, bevor ein asymmetrischer Stromfehler in dem Wechselstromnetz auftritt, einer Nennspannung des Wandlers, eines Nennstroms des Wandlers und der ersten Gegensystemspannung und Steuern des Umwandlungsmoduls derart, dass es einen zweiten Gegensystemblindstrom, dessen Stromwert gleich dem zweiten Gegensystemblindstromwert ist, in das Wechselstromnetz einspeist.

3. Wandler nach Anspruch 1, wobei das Fehlerdurchlauf-Steuerungsmodul ferner zu Folgendem konfiguriert ist: wenn die Fehlerdurchlaufdauer null ist oder die Fehlerdurchlaufdauer größer als ein voreingestellter Zeitschwellenwert oder gleich diesem ist, Erlangen eines zweiten Gegensystemblindstromwertes auf Grundlage eines ersten Gegensystemblindstroms, der verwendet wird, bevor ein asymmetrischer Stromfehler in dem Wechselstromnetz auftritt, des Fehlerbestimmungsschwellenwertes, einer Nennspannung des Wandlers, eines Nennstroms des Wandlers und der ersten Gegensystemspannung und Steuern des Umwandlungsmoduls derart, dass es einen zweiten Gegensystemblindstrom, dessen Stromwert gleich dem zweiten Gegensystemblindstromwert ist, in das Wechselstromnetz einspeist.

4. Wandler nach Anspruch 2, wobei das Fehlerdurchlauf-Steuerungsmodul ferner zu Folgendem konfiguriert ist: wenn die Fehlerdurchlaufdauer kleiner als ein voreingestellter Zeitschwellenwert ist, Erlangen eines zweiten Gegensystemblindstromwertes auf Grundlage einer zweiten Gegensystemspannung und eines ersten Gegensystemblindstroms, die verwendet werden, bevor ein asymmetrischer Stromfehler in dem Wechselstromnetz auftritt, einer Nennspannung des Wandlers, eines Nennstroms des Wandlers und der ersten Gegensystemspannung, Erlangen eines dritten Gegensystemblindstromwertes auf Grundlage des zweiten Gegensystemblindstromwertes und Steuern des Umwandlungsmoduls derart, dass es einen dritten Gegensystemblindstrom, dessen Stromwert gleich dem dritten Gegensystemblindstromwert ist, in das Wechselstromnetz einspeist, wobei ein Stromabsolutwert des dritten Gegensystemblindstroms kleiner als ein Stromabsolutwert des zweiten Gegensystemblindstroms ist.

5. Wandler nach Anspruch 2, wobei das Fehlerdurchlauf-Steuerungsmodul ferner zu Folgendem konfiguriert ist: wenn die Fehlerdurchlaufdauer kleiner als ein voreingestellter Zeitschwellenwert ist, Erlangen eines zweiten Gegensystemblindstromwertes auf Grundlage eines ersten Gegensystemblindstroms, der verwendet wird, bevor ein asymmetrischer Stromfehler in dem Wechselstromnetz auftritt, des Fehlerbestimmungsschwellenwertes, einer Nennspannung des Wandlers, eines Nennstroms des Wandlers und der ersten Gegensystemspannung, Erlangen eines dritten Gegensystemblindstromwertes auf Grundlage des zweiten Gegensystemblindstromwertes und Steuern des Umwandlungsmoduls derart, dass es einen dritten Gegensystemblindstrom, dessen Stromwert gleich dem dritten Gegensystemblindstromwert ist, in das Wechselstromnetz einspeist, wobei ein Stromabsolutwert des dritten Gegensystemblindstroms kleiner als ein Stromabsolutwert des zweiten Gegensystemblindstroms ist.

**6.** Wandler nach Anspruch 2 oder 4, wobei der zweite Gegensystemblindstrom die folgende Bedingung erfüllt:

$$Iqn2 = Iqn1 + K * In * \frac{(U2 - U1)}{Un},$$

wobei
U2 die zweite Gegensystemspannung ist, Iqn1 der erste Gegensystemblindstrom ist, Un die Nennspannung des Wandlers ist, In der Nennstrom des Wandlers ist, U1 die erste Gegensystemspannung ist, K eine positive Zahl ist und Iqn2 der zweite Gegensystemblindstrom ist.

**7.** Wandler nach Anspruch 3 oder 5, wobei der zweite Gegensystemblindstrom die folgende Bedingung erfüllt:

$$Iqn2 = Iqn1 + K * In * \frac{(Unv - U1)}{Un},$$

wobei
Iqn1 der erste Gegensystemblindstrom ist, Unv der Fehlerbestimmungsschwellenwert ist, Un die Nennspannung des Wandlers ist, In der Nennstrom des Wandlers ist, U1 die erste Gegensystemspannung ist, K eine positive Zahl ist und Iqn2 der zweite Gegensystemblindstrom ist.

**8.** Netzstromversorgungssystem, wobei das Netzstromversorgungssystem eine Stromversorgung, einen Transformator und den Wandler nach einem der Ansprüche 1 bis 7 umfasst, wobei

die Stromversorgung dazu konfiguriert ist, eine Energieeingabe oder Stromeingabe für den Wandler bereitzustellen;
der Wandler zu Folgendem konfiguriert ist: Durchführen einer Umwandlung auf Grundlage der Energieeingabe oder der Stromeingabe, die durch die Stromzufuhr bereitgestellt wird, um einen ersten Wechselstrom zu erlangen, und Ausgeben des ersten Wechselstroms an dem Transformator;
der Transformator zu Folgendem konfiguriert ist: Durchführen einer Stromumwandlung auf Grundlage des ersten Wechselstroms und Ausgeben eines zweiten Wechselstroms an dem Wechselstromnetz; und
der Wandler ferner zu Folgendem konfiguriert ist: wenn ein asymmetrischer Fehler in dem Wechselstromnetz auftritt, Einspeisen eines Gegensystemblindstroms in das Wechselstromnetz auf Grundlage der Fehlerdurchlaufdauer eines asymmetrischen Fehlerdurchlaufs aus dem Verlauf, der dem aktuellen Zeitpunkt am nächsten kommt und der in dem Wechselstromnetz auftritt.

**9.** Netzstromversorgungssystem nach Anspruch 8, wobei die Stromversorgung mindestens eines von einem Solarzellenpanel, einem Windturbinengenerator oder einer Energiespeicherbatterie umfasst.

**10.** Wandlersteuerungsverfahren für ein Netzstromversorgungssystem, wobei das Verfahren auf einen Wandler in dem Netzstromversorgungssystem anwendbar ist, das Netzstromversorgungssystem eine Stromversorgung, einen Transformator und den Wandler umfasst, ein Eingangsende des Wandlers an die Stromversorgung gekoppelt ist, ein Ausgangsende des Wandlers über den Transformator an ein Wechselstromnetz gekoppelt ist, der Wandler ein Umwandlungsmodul und ein Fehlerdurchlauf-Steuerungsmodul umfasst und das Verfahren Folgendes umfasst:
wenn ein asymmetrischer Fehlerparameter des Wechselstromnetzes größer als ein Fehlerbestimmungsschwellenwert ist, Steuern des Umwandlungsmoduls zum Einspeisen eines Gegensystemblindstroms in das Wechselstromnetz durch das Fehlerdurchlauf-Steuerungsmodul auf Grundlage der Fehlerdurchlaufdauer eines asymmetrischen Fehlerdurchlaufs aus dem Verlauf, der dem aktuellen Zeitpunkt am nächsten kommt und der in dem Wechselstromnetz auftritt, wobei der asymmetrische Fehlerparameter eines von Folgenden umfasst: einer ersten Gegensystemspannung, einer Differenz zwischen einem maximal gültigen Wert und einem entsprechenden minimal gültigen Wert einer dreiphasigen Leitungsspannung, einer Differenz zwischen einem maximalen Spitze-Spitze-Wert und einem entsprechenden minimalen Spitze-Spitze-Wert der dreiphasigen Leitungsspannung, einer Differenz zwischen einem maximalen Amplitudenwert und einem entsprechenden minimalen Amplitudenwert der dreiphasigen Leitungsspannung, einer Differenz zwischen einem maximal gültigen Wert und einem entsprechenden minimal gültigen Wert einer dreiphasigen Phasenspannung oder einer Differenz zwischen einem maximalen Spitze-Spitze-Wert und einem entsprechenden minimalen Spitze-Spitze-Wert der dreiphasigen Phasenspannung.

**11.** Verfahren nach Anspruch 10, wobei das Steuern des Umwandlungsmoduls zum Einspeisen eines Gegensystemblindstroms in das Wechselstromnetz durch das Fehlerdurchlauf-Steuerungsmodul auf Grundlage der Fehlerdurchlaufdauer eines asymmetrischen Fehlerdurchlaufs aus dem Verlauf, der dem aktuellen Zeitpunkt am nächsten kommt und der in dem Wechselstromnetz auftritt, Folgendes umfasst:

wenn die Fehlerdurchlaufdauer null ist oder die Fehlerdurchlaufdauer größer als ein voreingestellter Zeitschwellenwert oder gleich diesem ist, Erlangen eines zweiten Gegensystemblindstromwertes durch das Fehlerdurchlauf-Steuerungsmodul auf Grundlage einer zweiten Gegensystemspannung und eines ersten Gegensystemblindstroms, die verwendet werden, bevor ein asymmetrischer Stromfehler in dem Wechselstromnetz auftritt, einer Nennspannung des Wandlers, eines Nennstroms des Wandlers und der ersten Gegensystemspannung und Steuern des Umwandlungsmoduls derart, dass es einen zweiten Gegensystemblindstrom, dessen Stromwert gleich dem zweiten Gegensystemblindstromwert ist, in das Wechselstromnetz einspeist.

12. Verfahren nach Anspruch 10, wobei das Steuern des Umwandlungsmoduls zum Einspeisen eines Gegensystemblindstroms in das Wechselstromnetz durch das Fehlerdurchlauf-Steuerungsmodul auf Grundlage der Fehlerdurchlaufdauer eines asymmetrischen Fehlerdurchlaufs aus dem Verlauf, der dem aktuellen Zeitpunkt am nächsten kommt und der in dem Wechselstromnetz auftritt, Folgendes umfasst:

wenn die Fehlerdurchlaufdauer null ist oder die Fehlerdurchlaufdauer größer als ein voreingestellter Zeitschwellenwert oder gleich diesem ist, Erlangen eines zweiten Gegensystemblindstromwertes durch das Fehlerdurchlauf-Steuerungsmodul auf Grundlage eines ersten Gegensystemblindstroms, der verwendet wird, bevor ein asymmetrischer Stromfehler in dem Wechselstromnetz auftritt, des Fehlerbestimmungsschwellenwertes, einer Nennspannung des Wandlers, eines Nennstroms des Wandlers und der ersten Gegensystemspannung und Steuern des Umwandlungsmoduls derart, dass es einen zweiten Gegensystemblindstrom, dessen Stromwert gleich dem zweiten Gegensystemblindstromwert ist, in das Wechselstromnetz einspeist.

13. Verfahren nach Anspruch 10, wobei das Steuern des Umwandlungsmoduls zum Einspeisen eines Gegensystemblindstroms in das Wechselstromnetz durch das Fehlerdurchlauf-Steuerungsmodul auf Grundlage der Fehlerdurchlaufdauer eines asymmetrischen Fehlerdurchlaufs aus dem Verlauf, der dem aktuellen Zeitpunkt am nächsten kommt und der in dem Wechselstromnetz auftritt, Folgendes umfasst:

wenn die Fehlerdurchlaufdauer kleiner als ein voreingestellter Zeitschwellenwert ist, Erlangen eines zweiten Gegensystemblindstromwertes durch das Fehlerdurchlauf-Steuerungsmodul auf Grundlage einer zweiten Gegensystemspannung und eines ersten Gegensystemblindstroms, die verwendet werden, bevor ein asymmetrischer Stromfehler in dem Wechselstromnetz auftritt, einer Nennspannung des Wandlers, eines Nennstroms des Wandlers und der ersten Gegensystemspannung, Erlangen eines dritten Gegensystemblindstromwertes auf Grundlage des zweiten Gegensystemblindstromwertes und Steuern des Umwandlungsmoduls derart, dass es einen dritten Gegensystemblindstrom, dessen Stromwert gleich dem dritten Gegensystemblindstromwert ist, in das Wechselstromnetz einspeist, wobei ein Stromabsolutwert des dritten Gegensystemblindstroms kleiner als ein Stromabsolutwert des zweiten Gegensystemblindstroms ist.

14. Verfahren nach Anspruch 10, wobei das Steuern des Umwandlungsmoduls zum Einspeisen eines Gegensystemblindstroms in das Wechselstromnetz durch das Fehlerdurchlauf-Steuerungsmodul auf Grundlage der Fehlerdurchlaufdauer eines asymmetrischen Fehlerdurchlaufs aus dem Verlauf, der dem aktuellen Zeitpunkt am nächsten kommt und der in dem Wechselstromnetz auftritt, Folgendes umfasst:

wenn die Fehlerdurchlaufdauer kleiner als ein voreingestellter Zeitschwellenwert ist, Erlangen eines zweiten Gegensystemblindstromwertes durch das Fehlerdurchlauf-Steuerungsmodul auf Grundlage eines ersten Gegensystemblindstroms, der verwendet wird, bevor ein asymmetrischer Stromfehler in dem Wechselstromnetz auftritt, des Fehlerbestimmungsschwellenwertes, einer Nennspannung des Wandlers, eines Nennstroms des Wandlers und der ersten Gegensystemspannung, Erlangen eines dritten Gegensystemblindstromwertes auf Grundlage des zweiten Gegensystemblindstromwertes und Steuern des Umwandlungsmoduls derart, dass es einen dritten Gegensystemblindstrom, dessen Stromwert gleich dem dritten Gegensystemblindstromwert ist, in das Wechselstromnetz einspeist, wobei ein Stromabsolutwert des dritten Gegensystemblindstroms kleiner als ein Stromabsolutwert des zweiten Gegensystemblindstroms ist.

## Revendications

1. Convertisseur pour un système d'alimentation électrique de réseau, une extrémité d'entrée du convertisseur est couplée à une alimentation électrique dans le système d'alimentation électrique de réseau, une extrémité de sortie du convertisseur est couplée à un réseau de courant alternatif, et le convertisseur comprend un module de conversion et un module de commande de tenue aux défauts ; et

le module de commande de tenue aux défauts est configuré pour :

lorsqu'un paramètre de défaut asymétrique du réseau de courant alternatif est supérieur à un seuil de détermination de défaut, commander le module de conversion afin d'injecter un courant réactif de séquence négative dans le réseau de courant alternatif, dans lequel le paramètre de défaut asymétrique comprend l'une d'une première tension de séquence négative, d'une différence entre une valeur valide maximale et une valeur valide minimale correspondante d'une tension de ligne triphasée, d'une différence entre une valeur crête à crête maximale et une valeur crête à crête minimale correspondante de la tension de ligne triphasée, d'une différence entre une valeur d'amplitude maximale et une valeur d'amplitude maximale correspondante de la tension de ligne triphasée, d'une différence entre une valeur valide maximale et une valeur valide minimale correspondante d'une tension de phase triphasée, d'une différence entre une valeur crête à crête maximale et une valeur crête à crête minimale correspondante de la tension de phase triphasée ou d'une différence entre une valeur d'amplitude maximale et une valeur d'amplitude minimale correspondante de la tension de phase triphasée,

**caractérisé en ce que**
le module de tenue aux défauts est configuré pour commander le module de conversion sur la base d'une durée de tenue aux défauts d'une tenue aux défauts asymétriques historique qui est la plus proche du temps actuel et qui se produit dans le réseau de courant alternatif.

2.　Convertisseur selon la revendication 1, dans lequel le module de commande de tenue aux défauts est également configuré pour : lorsque la durée de tenue aux défauts est nulle ou que la durée de tenue aux défauts est supérieure ou égale à un seuil de temps prédéfini, obtenir une deuxième valeur de courant réactif de séquence négative sur la base d'une seconde tension de séquence négative et d'un premier courant réactif de séquence négative qui sont utilisés avant qu'un défaut asymétrique de courant ne se produise dans le réseau de courant alternatif, une tension nominale du convertisseur, un courant nominal du convertisseur et la première tension de séquence négative, et commander le module de conversion afin d'injecter un deuxième courant réactif de séquence négative dont la valeur de courant est égale à la deuxième valeur de courant réactif de séquence négative dans le réseau de courant alternatif.

3.　Convertisseur selon la revendication 1, dans lequel le module de commande de tenue aux défauts est également configuré pour : lorsque la durée de tenue aux défauts est nulle ou que la durée de tenue aux défauts est supérieure ou égale à un seuil de temps prédéfini, obtenir une deuxième valeur de courant réactif de séquence négative sur la base d'un premier courant réactif de séquence négative utilisé avant qu'un défaut asymétrique de courant ne se produise dans le réseau de courant alternatif, le seuil de détermination de défaut, une tension nominale du convertisseur, un courant nominal du convertisseur et la première tension de séquence négative, et commander le module de conversion afin d'injecter un deuxième courant réactif de séquence négative dont la valeur de courant est égale à la deuxième valeur de courant réactif de séquence négative dans le réseau de courant alternatif.

4.　Convertisseur selon la revendication 2, dans lequel le module de commande de tenue aux défauts est également configuré pour : lorsque la durée de tenue aux défauts est inférieure à un seuil de temps prédéfini, obtenir une deuxième valeur de courant réactif de séquence négative sur la base d'une seconde tension de séquence négative et d'un premier courant réactif de séquence négative qui sont utilisés avant qu'un défaut asymétrique de courant ne se produise dans le réseau de courant alternatif, une tension nominale du convertisseur, un courant nominal du convertisseur et la première tension de séquence négative, obtenir une troisième valeur de courant réactif de séquence négative sur la base de la deuxième valeur de courant réactif de séquence négative, et commander le module de conversion afin d'injecter un troisième courant réactif de séquence négative dont la valeur de courant est égale à la troisième valeur de courant réactif de séquence négative dans le réseau de courant alternatif, dans lequel une valeur absolue de courant du troisième courant réactif de séquence négative est inférieure à une valeur absolue de courant du deuxième courant réactif de séquence négative.

5.　Convertisseur selon la revendication 2, dans lequel le module de commande de tenue aux défauts est également configuré pour : lorsque la durée de tenue aux défauts est inférieure à un seuil de temps prédéfini, obtenir une deuxième valeur de courant réactif de séquence négative sur la base d'un premier courant réactif de séquence négative utilisé avant qu'un défaut asymétrique de courant ne se produise dans le réseau de courant alternatif, le seuil de détermination de défaut, une tension nominale du convertisseur, un courant nominal du convertisseur et la première tension de séquence négative, obtenir une troisième valeur de courant réactif de séquence négative sur la base de la deuxième valeur de courant réactif de séquence négative, et commander le module de conversion afin d'injecter un troisième courant réactif de séquence négative dont la valeur de courant est égale à la troisième valeur de courant réactif de séquence négative dans le réseau de courant alternatif, dans lequel une valeur absolue de courant du troisième courant réactif de séquence négative est inférieure à une valeur absolue de courant du deuxième courant réactif de séquence négative.

6. Convertisseur selon la revendication 2 ou 4, dans lequel le deuxième courant réactif de séquence négative satisfait à :

$$Iqn2 = Iqn1 + K * In * \frac{(U2 - U1)}{Un},$$

dans lequel
U2 est la seconde tension de séquence négative, Iqn1 est le premier courant réactif de séquence négative, Un est la tension nominale du convertisseur, In est le courant nominal du convertisseur, U1 est la première tension de séquence négative, K est un nombre positif et Iqn2 est le deuxième courant réactif de séquence négative.

7. Convertisseur selon la revendication 3 ou 5, dans lequel le deuxième courant réactif de séquence négative satisfait à :

$$Iqn2 = Iqn1 + K * In * \frac{(Unv - U1)}{Un},$$

dans lequel
Iqn1 est le premier courant réactif de séquence négative, Unv est le seuil de détermination de défaut, Un est la tension nominale du convertisseur, In est le courant nominal du convertisseur, U1 est la première tension de séquence négative, K est un nombre positif et Iqn2 est le deuxième courant réactif de séquence négative.

8. Système d'alimentation électrique de réseau, dans lequel le système d'alimentation électrique de réseau comprend une alimentation électrique, un transformateur et le convertisseur selon l'une quelconque des revendications 1 à 7, dans lequel l'alimentation électrique est configurée pour fournir une entrée d'énergie ou une entrée de puissance pour le convertisseur ;

le convertisseur est configuré pour : réaliser une conversion sur la base de l'entrée d'énergie ou de l'entrée de puissance fournie par l'alimentation électrique, pour obtenir un premier courant alternatif, et délivrer le premier courant alternatif au transformateur ;
le transformateur est configuré pour : réaliser une conversion de puissance sur la base du premier courant alternatif et délivrer un second courant alternatif au réseau de courant alternatif ; et

le convertisseur est également configuré pour : lorsqu'un défaut asymétrique se produit dans le réseau de courant alternatif, injecter un courant réactif de séquence négative dans le réseau de courant alternatif sur la base d'une durée de tenue aux défauts d'une tenue aux défauts asymétriques historique qui est la plus proche du temps actuel et qui se produit dans le réseau de courant alternatif.

9. Système d'alimentation électrique de réseau selon la revendication 8, dans lequel l'alimentation électrique comprend au moins l'un d'un panneau de cellules solaires, d'un générateur d'éolienne ou d'une batterie de stockage d'énergie.

10. Procédé de commande de convertisseur pour un système d'alimentation électrique de réseau, dans lequel le procédé est applicable à un convertisseur dans le système d'alimentation électrique de réseau, le système d'alimentation électrique de réseau comprend une alimentation électrique, un transformateur et le convertisseur, une extrémité d'entrée du convertisseur est couplée à l'alimentation électrique, une extrémité de sortie du convertisseur est couplée à un réseau de courant alternatif à travers le transformateur, le convertisseur comprend un module de conversion et un module de commande de tenue aux défauts, et le procédé comprend :
lorsqu'un paramètre de défaut asymétrique du réseau de courant alternatif est supérieur à un seuil de détermination de défaut, la commande, par le module de commande de tenue aux défauts sur la base d'une durée de tenue aux défauts d'une tenue aux défauts asymétriques qui est la plus proche du temps actuel et qui se produit dans le réseau de courant alternatif, du module de conversion afin d'injecter un courant réactif de séquence négative dans le réseau de courant alternatif, dans lequel le paramètre de défaut asymétrique comprend l'une d'une première tension de séquence négative, d'une différence entre une valeur maximale valide et une valeur minimale valide correspondante d'une tension de ligne triphasée, d'une différence entre une valeur crête à crête maximale et une valeur crête à crête minimale correspondante de la tension de ligne triphasée, d'une différence entre une valeur d'amplitude maximale et une valeur d'amplitude maximale correspondante de la tension de ligne triphasée, d'une différence entre une valeur valide maximale et une valeur valide minimale correspondante d'une tension de phase triphasée ou d'une différence entre une valeur crête à crête maximale et une valeur crête à crête minimale correspondante de la tension de phase triphasée.

11. Procédé selon la revendication 10, dans lequel la commande, par le module de commande de tenue aux défauts sur la base d'une durée de tenue aux défauts d'une tenue aux défauts asymétriques historique qui est la plus proche du temps actuel et qui se produit dans le réseau de courant alternatif, du module de conversion afin d'injecter un courant réactif de séquence négative dans le réseau de courant alternatif comprend :

lorsque la durée de tenue aux défauts est nulle ou que la durée de tenue aux défauts est supérieure ou égale à un seuil de temps prédéfini, l'obtention, par le module de commande de tenue aux défauts, d'une deuxième valeur de courant réactif de séquence négative sur la base d'une seconde tension de séquence négative et d'un premier courant réactif de séquence négative qui sont utilisés avant qu'un défaut asymétrique de courant ne se produise dans le réseau de courant alternatif, d'une tension nominale du convertisseur, d'un courant nominal du convertisseur et de la première tension de séquence négative, et la commande du module de conversion afin d'injecter un deuxième courant réactif de séquence négative dont la valeur de courant est égale à la deuxième valeur de courant réactif de séquence négative dans le réseau de courant alternatif.

**12.** Procédé selon la revendication 10, dans lequel la commande, par le module de commande de tenue aux défauts sur la base d'une durée de tenue aux défauts d'une tenue aux défauts asymétriques historique qui est la plus proche du temps actuel et qui se produit dans le réseau de courant alternatif, du module de conversion afin d'injecter un courant réactif de séquence négative dans le réseau de courant alternatif comprend :

lorsque la durée de tenue aux défauts est nulle ou que la durée de tenue aux défauts est supérieure ou égale à un seuil de temps prédéfini, l'obtention, par le module de commande de tenue aux défauts, d'une deuxième valeur de courant réactif de séquence négative sur la base d'un premier courant réactif de séquence négative utilisé avant qu'un défaut asymétrique de courant ne se produise dans le réseau de courant alternatif, du seuil de détermination de défaut, d'une tension nominale du convertisseur, d'un courant nominal du convertisseur et de la première tension de séquence négative, et la commande du module de conversion afin d'injecter un deuxième courant réactif de séquence négative dont la valeur de courant est égale à la deuxième valeur de courant réactif de séquence négative dans le réseau de courant alternatif.

**13.** Procédé selon la revendication 10, dans lequel la commande, par le module de commande de tenue aux défauts sur la base d'une durée de tenue aux défauts d'une tenue aux défauts asymétriques historique qui est la plus proche du temps actuel et qui se produit dans le réseau de courant alternatif, du module de conversion afin d'injecter un courant réactif de séquence négative dans le réseau de courant alternatif comprend :

lorsque la durée de tenue aux défauts est inférieure à un seuil de temps prédéfini, l'obtention, par le module de commande de tenue aux défauts, d'une deuxième valeur de courant réactif de séquence négative sur la base d'une seconde tension de séquence négative et d'un premier courant réactif de séquence négative qui sont utilisés avant qu'un défaut asymétrique de courant ne se produise dans le réseau de courant alternatif, d'une tension nominale du convertisseur, d'un courant nominal du convertisseur et de la première tension de séquence négative, l'obtention d'une troisième valeur de courant réactif de séquence négative sur la base de la deuxième valeur de courant réactif de séquence négative, et la commande du module de conversion afin d'injecter un troisième courant réactif de séquence négative dont la valeur de courant est égale à la troisième valeur de courant réactif de séquence négative dans le réseau de courant alternatif, dans lequel une valeur absolue de courant du troisième courant réactif de séquence négative est inférieure à une valeur absolue de courant du deuxième courant réactif de séquence négative.

**14.** Procédé selon la revendication 10, dans lequel la commande, par le module de commande de tenue aux défauts sur la base d'une durée de tenue aux défauts d'une tenue aux défauts asymétriques historique qui est la plus proche du temps actuel et qui se produit dans le réseau de courant alternatif, du module de conversion afin d'injecter un courant réactif de séquence négative dans le réseau de courant alternatif comprend :

lorsque la durée de tenue aux défauts est inférieure à un seuil de temps prédéfini, l'obtention, par le module de commande de tenue aux défauts, d'une deuxième valeur de courant réactif de séquence négative sur la base d'un premier courant réactif de séquence négative utilisé avant qu'un défaut asymétrique de courant ne se produise dans le réseau de courant alternatif, du seuil de détermination de défaut, d'une tension nominale du convertisseur, d'un courant nominal du convertisseur et de la première tension de séquence négative, l'obtention d'une troisième valeur de courant réactif de séquence négative sur la base de la deuxième valeur de courant réactif de séquence négative, et la commande du module de conversion afin d'injecter un troisième courant réactif de séquence négative dont la valeur de courant est égale à la troisième valeur de courant réactif de séquence négative dans le réseau de courant alternatif, dans lequel une valeur absolue de courant du troisième courant réactif de séquence négative est inférieure à une valeur absolue de courant du deuxième courant réactif

de séquence négative.

FIG. 1

Photovoltaic module · Photovoltaic array · Converter · Energy storage battery · Converter · Wind turbine generator · Converter · Transformer · Storage battery · Communication base station · Household device · Alternating current grid

EP 4 312 335 B1

Asymmetric fault ride through flag

FIG. 2a

Negative-sequence reactive current instruction

Feedback value

FIG. 2b

FIG. 3

Converter

| Power supply | Converter | | Transformer | Alternating current grid |

Converting module

Fault ride through control module

FIG. 4

Asymmetric fault ride through flag

FIG. 5a

FIG. 5b

FIG. 6

When it is detected that an asymmetric fault occurs in an alternating current grid, obtain fault ride through duration of historical asymmetric fault ride through that is closest to current time and that occurs in the alternating current grid — S701

Is the fault ride through duration null? — S702

Yes

No

Is the fault ride through duration less than a preset time threshold? — S703

Yes

No

Determine a second negative-sequence reactive current value, and inject a second negative-sequence reactive current whose current value is equal to the second negative-sequence reactive current value into the alternating current grid — S704

Determine a second negative-sequence reactive current value, obtain a third negative-sequence reactive current value based on the second negative-sequence reactive current value, and inject a third negative-sequence reactive current whose current value is equal to the third negative-sequence reactive current value into the alternating current grid — S705

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220099754 A1

- CN 112994104 B